(19) Europäisches Patentamt
European Patent Office
Office européen des brevets

(11) Numéro de publication: **0 467 796 B1**

(12) # FASCICULE DE BREVET EUROPEEN

(45) Date de publication du fascicule du brevet: **18.10.95**

(51) Int. Cl.$^6$: **C08G 73/12**, C08F 222/40

(21) Numéro de dépôt: **91420229.6**

(22) Date de dépôt: **05.07.91**

(54) **Polymères à groupements imides et procédé de préparation.**

(30) Priorité: **16.07.90 FR 9009271**

(43) Date de publication de la demande:
**22.01.92 Bulletin 92/04**

(45) Mention de la délivrance du brevet:
**18.10.95 Bulletin 95/42**

(84) Etats contractants désignés:
**AT BE CH DE DK ES FR GB GR IT LI LU NL SE**

(56) Documents cités:
**EP-A- 0 284 524**
**EP-A- 0 334 771**
**FR-A- 2 608 612**

**PATENT ABSTRACTS OF JAPAN vol. 14, no. 176 (C-707)(4119) 9 Avril 1990 & JP-A-2 24 305**

(73) Titulaire: **CIBA-GEIGY AG**
**Klybeckstrasse 141**
**CH-4002 Basel (CH)**

(72) Inventeur: **Camberlin, Yves**
**68 bis, quai Clemenceau**
**F-69300 Caluire (FR)**
Inventeur: **Dien, René**
**39, avenue Gilbert Fabre**
**F-69390 Millery (FR)**
Inventeur: **Michaud, Philippe**
**100, rue Bugeaud**
**F-69006 Lyon (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 467 796 B1

## Description

La présente invention a pour objet de nouveaux polymères thermostables dont l'obtention met en jeu des bis-imides.

On a déjà décrit des polymères obtenus par réaction entre un N,N'-bis-imide d'acide dicarboxylique insaturé tel que par exemple un N,N'-bis-maléimide avec une diamine biprimaire [brevet français n° 1.555.564]. Les quantités de N,N'-bis-imide et de diamine sont choisies de façon à ce que le rapport :

$$\frac{\text{nombre de moles de bis-imide}}{\text{nombre de moles de diamine}}$$

soit au moins égal à 1 ; par ailleurs, on préfère généralement qu'il soit inférieur à 50. On obtient des résines thermostables qui résistent remarquablement aux contraintes thermiques sévères.

Il est également indiqué dans le brevet français précité que la préparation de ces résines peut être effectuée en masse en chauffant les réactifs préalablement soumis à un mélange intime ou bien au sein d'un diluant polaire inerte tel que le diméthylformamide, la N-méthylpyrrolidone, le diméthylacétamide, ce dernier processus pouvant être utilisé par exemple lorsque la mise en oeuvre du polymère nécessite l'emploi d'une solution.

Finalement, il est mentionné que pour de nombreux emplois, il est avantageux d'opérer en deux temps ; dans un premier stade, on prépare un prépolymère par chauffage du mélange intime des deux réactifs à une température de l'ordre de 100 à 250 ° C. Le prépolymère obtenu peut être utilisé à l'état de solution, de suspension, de poudre ou bien être conformé encore par simple coulée à chaud. Dans un second stade, on peut provoquer le durcissement du prépolymère par chauffage jusqu'à des températures de l'ordre de 350 ° C, éventuellement sous pression.

FR-A-2608612 décrit des polymères thermostables obtenus par réaction entre (a) un ou plusieurs N,N'-bis-imides maléiques et (b) un ou plusieurs alkényloxyanilines.

La présente invention concerne de nouveaux polymères à groupements imides caractérisés en ce qu'ils comprennent le produit de réaction entre :

(a) un N,N'-bis-imide ou une association de plusieurs bis-imides de formule :

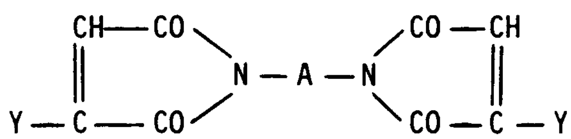

(I)

dans laquelle :

- le symbole Y représente H, $CH_3$ ou Cl
- le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; méthyl-6 phénylène-1,3 ; diéthyl-2,5 méthyl-3 phénylène-1,4 ; et les radicaux de formule :

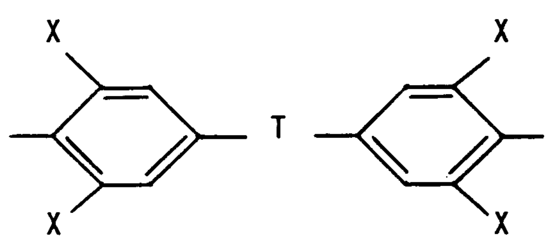

dans laquelle T représente un lien valentiel simple ou un groupement :

- $CH_2$- ;

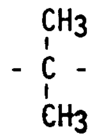

- O - ;

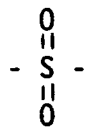 ; 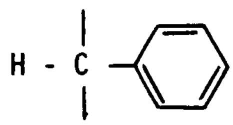 ; 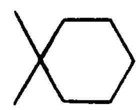 ;

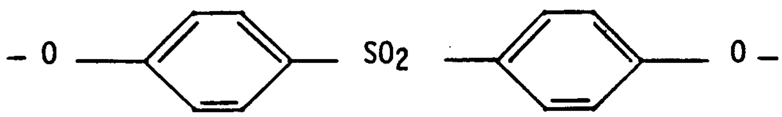

et X représente un atome d'hydrogène, un radical méthyle, éthyle ou isopropyle ;
(b) une ou plusieurs p-allylaniline(s) de formule :

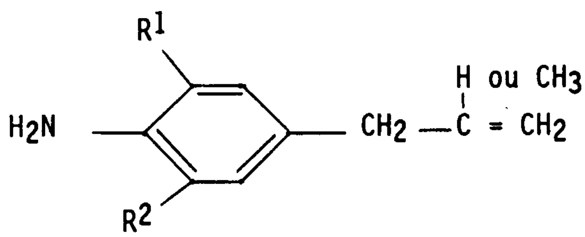 (II)

dans laquelle les groupements $R^1$ et $R^2$, identiques ou différents, représentent des groupements alkyles en C1 à C4, comme par exemple les groupements méthyle, éthyle, propyle, isopropyle, butyle.

A titre d'exemples spécifiques de bis-imides de formule (I), on peut citer en particulier :

- le N,N′-métaphénylène-bis-maléimide,
- le N,N′-paraphénylène-bis-maléimide,
- le N,N′-4,4′-diphénylméthane-bis-maléimide,
- le N,N′-4,4′-diphényléther-bis-maléimide,
- le N,N′-4,4′-diphénylsulfone-bis-maléimide,
- le N,N′-cyclohexylène-1,4-bis-maléimide,
- le N,N′-4,4′-diphényl-1,1 cyclohexane-bis-maléimide,
- le N,N′-4,4′-diphényl-2,2 propane-bis-maléimide,
- le N,N′-4,4′-triphénylméthane-bis-maléimide,
- le N,N′-méthyl-2 phénylène-1,3-bis-maléimide,
- le N,N′-méthyl-4 phénylène-1,3-bis-maléimide,
- le N,N′-méthyl-5 phénylène-1,3-bis-maléimide.

Ces bis-maléimides peuvent être préparés selon les procédés décrits dans le brevet américain n° 3.018.290 et le brevet anglais n° 1.137.290. On utilise de préférence, pour la mise en oeuvre de la présente invention, le N,N′-4,4,'-diphénylméthane-bis-maléimide pris seul ou en mélange avec le N,N′-méthyl-2 phénylène-1,3-bis-maléimide, le N,N′-méthyl-4 phénylène-1,3-bis-maléimide, le N,N′-méthyl-5 phénylène-1,3-bis-maléimide.

A titre d'exemples spécifiques de p-allylaniline de formule (II), on peut citer :

- l'allyl-4-diéthyl-2-6-aniline,
- la méthallyl-4-diéthyl-2-6-aniline,

- l'allyl-4-diméthyl-2-6-aniline,
- la méthallyl-4-diméthyl-2-6-aniline,
- l'allyl-4-dipropyl-2-6-aniline,
- la méthallyl-4-dipropyl-2-6-aniline,
- l'allyl-4-méthyl-2-éthyl-6-aniline,
- la méthallyl-4-méthyl-2-éthyl-6-aniline.

Ces p-allylanilines de formule (II) peuvent être préparées selon le procédé décrit dans J. Chem. Soc. (C), 1967, pages 1780 à 1782.

Les quantités de N,N'-bis-imide(s) (a) et de p-allylaniline (b) sont choisies de façon à ce que le rapport :

$$\frac{\text{nombre de moles de (a)}}{\text{nombre de moles de groupements } NH_2}$$

soit compris entre 20 et 0,1, de préférence entr 5 et 0,5.

Pour l'obtention des polymères selon la présente invention, on peut éventuellement utiliser un catalyseur c) ou un mélange de catalyseurs, tels :

- qu'un péroxyde organique comme par exemple le péroxyde de dicumyle, le péroxyde de lauroyle,
- que l'azobisisobutyronitrile,
- qu'un dérivé de l'imidazole de formule générale :

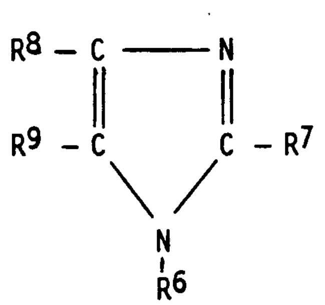

dans laquelle $R^6$, $R^7$, $R^8$ et $R^9$, identiques ou différents, représentent chacun : un atome d'hydrogène, un radical alkyle ou alcoxy ayant de 1 à 20 atomes de carbone, vinyle, phényle, nitro, $R^8$ pouvent former avec $R^9$ et les atomes de carbone auxquels sont liés ces radicaux un cycle unique comme par exemple un cycle benzénique, $R^6$ pouvant également représenter un groupement carbonyle lié à un deuxième cycle imidazole. Comme exemples spécifiques de composés imidazole, on peut citer en particulier : l'imidazole ou glyoxaline, le méthyl-1 imidazole, le méthyl-2 imidazole, le diméthyl-1,2 imidazole, le vinyl-1 imidazole, le vinyl-1 méthyl-2 imidazole, le benzimidazole, le carbonyldiimidazole.

Selon la nature du composé c) utilisé et selon la vitesse de polymérisation souhaitée, on utilise le catalyseur à un taux se situant dans l'intervalle allant de 0,01 à 6 % en poids, par rapport à l'ensemble des réactifs a) et b), de préférence compris entre 0,1 et 3 %.

Généralement, ce catalyseur est en solution, de préférence dans le cyclohexanone.

Les polymères selon la présente invention sont obtenus en ajoutant (de façon avantageuse) aux composés a) et b) précédemment définis, [avec éventuellement le composé c)] un composé d) choisi parmi les vinylpyridines, la N-vinylpyrrolidone, l'isocyanurate d'allyle, le vinyltétrahydrofuranne et leurs mélanges.

La quantité de composé d) utilisée représente généralement moins de 50 %, et de préférence de 1 % à 25 % de poids total des réactifs a et b.

Ce composé d) est avantageusement utilisé dans un solvant, tel que par exemple la cyclohexanone.

Les polymères selon la présente invention peuvent être obtenus en ajoutant aux composés (a) et (b) précédemment définis avec éventuellement (c) et/ou (d), un composé (e) consistant en une ou plusieurs diamines biprimaires choisies parmi :

(i) les espèces répondant à la formule générale :

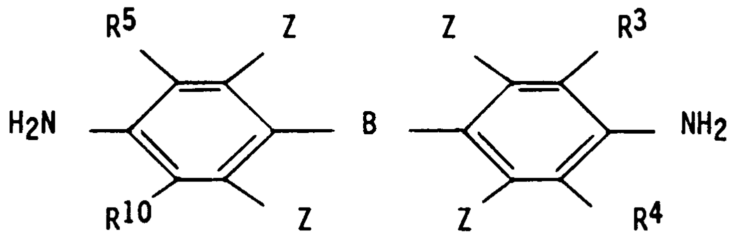

(IV)

dans laquelle :

. les symboles $R^5$, $R^{10}$, $R^3$ et $R^4$, identiques ou différents, représentent chacun un radical méthyle, éthyle, propyle ou isopropyle ;
. les symboles Z, identiques ou différents, représentent chacun un atome d'hydogène ou un atome de chlore ;
. le symbole B représente un radical divalent choisi dans le groupe formé par les radicaux : $- CH_2 -$ ;

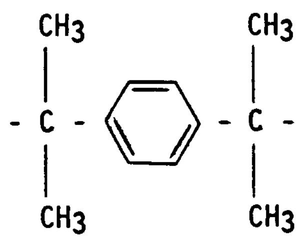

et

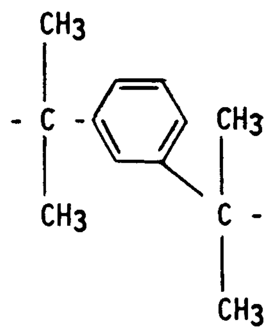

(2i) et les espèces répondant à la formule générale :

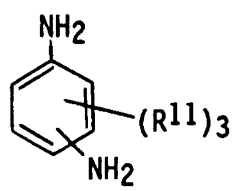

(III)

dans laquelle :

. les radicaux amino sont en position méta ou para, l'un par rapport à l'autre ;
. les symboles $R^{11}$, identiques ou différents, représentent chacun un radical méthyle, éthyle, propyle ou isopropyle ;

(3i) les espèces consistant dans une ou plusieurs guanamine(s) substituée(s) de formule :

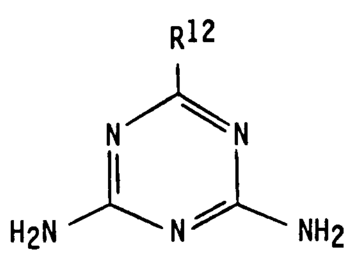

(V)

dans laquelle le symbole $R^{12}$ représente : un radical alkyle, linéaire ou ramifié, comportant de 1 à 12 atomes de carbone, comme par exemple un radical méthyle, éthyle, propyle, butyle, pentyle, hexyle, heptyle, octyle, nonyle, décyle, undécyle ou dodécyle ; un radical alkoxy comportant de 1 à 12 atomes de carbone ; un radical phényle éventuellement substitué par 1 à 3 radicaux alkyle ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyle ayant de 1 à 3 atomes de carbone.

Lorsque les polymères selon la présente invention sont préparés avec un (ou des) composé(s) (e) précédemment défini(s), le rapport

$$\frac{\text{nombre de moles de (a)}}{\text{nombre de moles de groupements } NH_2}$$

précédemment défini, est respecté mais 50 % au moins des groupements $NH_2$ proviennent du composé (b).

D'autre part, lorsque le composé (3i) est utilisé, il ne représente que 2 à 30 % et de préférence 4 à 15 %, en poids, du mélange bis-imide(s) (a) + paraallylaniline (b).

A titre d'exemples spécifiques de composés (e) de formule III, on peut citer en particulier :

- le diamino-1,3 diéthyl-2,4 méthyl-6 benzène,
- le diamino-1,3 méthyl-2 diéthyl-4,6 benzène.

A titre d'exemples spécifiques de composés (e) de formule (IV), on peut citer en particulier :

- le diamino-4,4' tétraméthyl-3,3',5,5' diphénylméthane,
- le diamino-4,4' tétraéthyl-3,3',5,5' diphénylméthane,
- le diamino-4,4' diméthyl-3,5 diéthyl-3',5' diphénylméthane,
- le diamino-4,4' diéthyl-3,3' diméthyl-5,5' diphénylméthane,
- le diamino-4,4' tétraisopropyl-3,3',5,5' diphénylméthane,
- le diamino-4,4' diisopropyl-3,3' diméthyl-5,5' diphénylméthane,
- le bis (amino-4 diméthyl-3,5 α,α-diméthylbenzyl)-1,4 benzène,
- le bis (amino-4 diméthyl-3,5 α,α-diméthylbenzyl)-1,3 benzène.

Ces diamines de formule (IV) peuvent être préparées selon les procédés décrits dans le brevet anglais GB-A-852.651 et le brevet américain US-A-3.481.900. On utilise de préférence, pour la mise en oeuvre de la présente invention, le diamino-4,4′ tétraméthyl-3,3′5,5′ diphénylméthane, le diamino-4,4′ tétraéthyl-3,3′5,5′ diphénylméthane, le diamino-4,4′ diéthyl-3,3′ diméthyl-5,5′ diphénylméthane et leurs mélanges.

A titre d'exemples de composés (e) de formule (V), on peut citer :

- la diamino-2,4 méthyl-6 triazine-1,3,5,
- la diamino-2,4 éthyl-6 triazine-1,3,5,
- la diamino-2,4 butyl-6 triazine-1,3,5,
- la diamino-2,4 nonyl-6 triazine-1,3,5,
- la diamino-2,4 undécyl-6 triazine-1,3,5,
- la diamino-2,4 méthoxy-6 triazine-1,3,5,
- la diamino-2,4 butoxy-6 triazine-1,3,5,
- la diamino-2,4 phényl-6 triazine-1,3,5,
- la diamino-2,4 benzyl-6 triazine-1,3,5,
- la diamino-2,4 (méthyl-4)phényl-6 triazine-1,3,5,
- et leurs mélanges.

Les polymères selon la présente invention peuvent être obtenus en ajoutant aux composés (a) et (b) [avec éventuellement les composés c, et/ou d et/ou e] un composé f ou un mélange de composés f choisi-(s) parmi :

* (f1) une résine époxy chlorée ou bromée ;

* (f2) un N,N'-alkylène-bis-tétrahalogénophtalimide de formule :

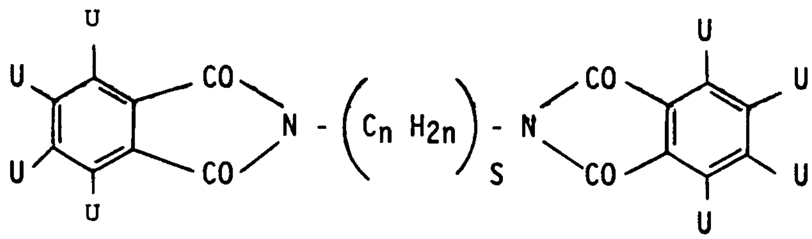

(VI)

dans laquelle :

. les symboles U, identiques ou différents, représentent chacun un atome de chlore ou de brome ;

. le radical alkylène $-C_n H_{2n}-$ peut être linéaire ou ramifié ;

. n est un nombre entier égal à 1, 2, 3 ou 4 ;

. S est 0 ou 1.

* (f3) un produit halogéné de formule :

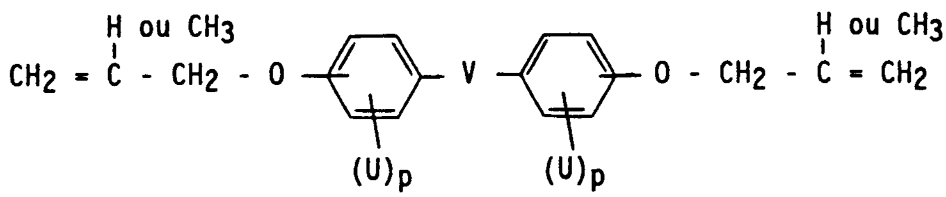

(VII)

dans laquelle :

. les symboles U ont la signification donnée ci-avant ;

. le symbole V représente un lien valentiel simple, un radical alkylène $-C_n H_{2n}-$, linéaire ou ramifié, avec n étant égal à 1, 2, 3 ou 4 ou un atome d'oxygène ;

. p est un nombre entier égal à 2, 3 ou 4 ;

* (f4) une résine époxy non halogénée ;

* (f5) un alkénylphénol de formule :

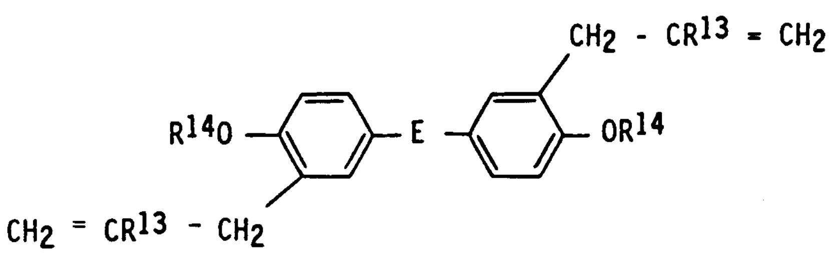

(VIII)

dans laquelle :

. le symbole E représente un lien valentiel simple ou radical divalent choisi dans le groupe formé par les radicaux ;

$- CH_2 -$ ; $- CH_2 - CH_2 -$ ;

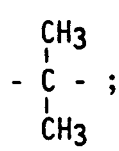

- O - ; - S - ; - SO - ; et $- SO_2 -$;

. les symboles $R^{13}$, identiques ou différents, représentent chacun un atome d'hydrogène ou un radical méthyle ;

. les symboles $R^{14}$, identiques ou différents, représentent chacun un atome d'hydrogène ou un radical alkyle linéaire ou ramifié ayant de 1 à 6 atomes de carbone ou un radical phényle ;

(f6) un acrylate de formule générale :

$$(CH_2 = CR^{15} - CO - O)_n\!\!-\!\!-\!\!-B \qquad (IX)$$

dans laquelle :

. le symbole $R^{15}$ représente un atome d'hydrogène ou un radical méthyle ;

. n représente un nombre entier ou fractionnaire au moins égal à 1 et au plus égal à 8 ;

. le symbole B représente un radical organique de valence n dérivé : d'un reste aliphatique saturé, linéaire ou ramifié, ayant de 1 à 30 atomes de carbone et pouvant renfermer un ou plusieurs pont(s) oxygène et/ou une ou plusieurs fonction(s) hydroxyle(s) libre(s) ; d'un reste aromatique (de type arylique ou arylaliphatique) ayant de 6 à 150 atomes de carbone constitué par un noyau benzénique, pouvant être substitué par un à trois radicaux alkyles ayant de 1 à 5 atomes de carbone, ou par plusieurs noyaux benzéniques, éventuellement substitués comme indiqué ci-avant, reliés entre eux par un lien valentiel simple, un groupement inerte ou un radical alkylène ayant de 1 à 3 atomes de carbone, ledit reste aromatique pouvant renfermer à divers endroits de sa stucture un ou plusieurs pont(s) oxygène et/ou une ou plusieurs fonction(s) hydroxyle(s) libre(s), le (ou les) valence(s) libre(s) du radical B aromatique pouvant être portée(s) par un atome de carbone d'une chaîne aliphatique et/ou par un atome de carbone d'un noyau benzénique.

Lorsqu'un composé (f) (ou un mélange de composés f) est utilisé pour la réalisation des polymères selon la présente invention, il représente en poids 2 à 35 %, de préférence 5 à 30 %, du mélange (a) + (b) + éventuellement (c) + éventuellement (d) + éventuellement (e).

On a constaté que la quantité de chlore ou de brome qui peut être apportée dans les polymères selon l'invention par l'additif f1 et/ou f2 et/ou f3 est de nature à influencer certaines propriétés des polymères durcis obtenus, notamment les propriétés en matière de stabilité thermique et celles en matière d'adhérence des polymères sur des métaux tels que par exemple le cuivre. Dans ce cadre, les meilleurs résultats sont obtenus lorsque cette quantité de chlore ou de brome apportée par l'additif (f), exprimée par le pourcentage en poids de chlore élémentaire ou de brome élémentaire par rapport au poids du mélange global bis-imide(s) (a) + diamine(s) (b) + composé facultatif (d) + composé (e) facultatif, représente au plus 8 % ; cette quantité de chlore ou de brome se situe de préférence dans l'intervalle allant de 1 à 6 %. On peut ajuster aisément la quantité de chlore ou de brome à la valeur souhaitée en mettant en oeuvre par exemple des résines époxy (f1) ayant une teneur en chlore ou en brome plus ou moins importante ou en partant de mélanges de résines époxy chlorées ou bromées (f1) avec des résines époxy non halogénées (f4) ou encore en partant de mélanges de composés (f2) et/ou (f3) avec des résines époxy non halogénées (f4).

Par résine époxy chlorée ou bromée (f1), on entend définir une résine époxy qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par : la famille des bis(hydroxyphényl)alcanes comme le bis-(hydroxy-4 phényl)-2,2 propane, le bis(hydroxy-4 phényl) méthane, le bis(hydroxy-4 phényl) méthyl-phényl-méthane, les bis(hydroxy-4 phényl)tolyl-méthanes ; le résorcinol ; l'hydroquinone ; le pyrocatéchol ; le dihydroxy-4,4′ diphényle ; et les produits de condensation des phénols précités avec un aldéhyde.

L'expression "poids d'équivalent époxy", qui apparait ci-avant, peut être définie comme étant le poids de résine (en gramme) renfermant une fonction époxy

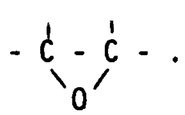

On choisit de préférence une résine époxy chlorée ou bromée possédant un poids d'équivalent époxy compris entre 250 et 500. On utilise tout préférentiellement dans la présente invention une résine époxy (f1) consistant dans une résine appartenant à la famille des éthers glycidiques des bis(hydroxyphényl)-

alcanes, bromés sur les noyaux aromatiques, dont on a parlé ci-avant à propos de la définition détaillée de la résine (e1).

S'agissant du composé (f2) de formule (VI), on choisit de préférence un N,N′-alkylène-bis-tétrabromophtalimide. On utilise tout préférentiellement dans la présente invention le N,N′-éthylène-bis-tétrabromophtalimide.

S'agissant du composé (f3) de formule (VII), on choisit de préférence un bis(allyloxydibromophényl)-alcane de formule :

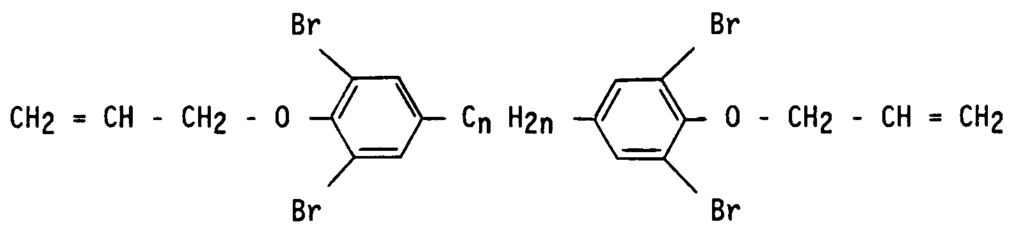

(X)

dans laquelle n est un nombre entier égal à 1, 2 ou 3. On utilise tout préférentiellement dans la présente invention le bis(allyloxy-4 dibromo-3,5 phényl)-2,2 propane.

Par résine époxy non halogénée (f4), on entend définir une résine époxy qui possède un poids d'équivalent époxy compris entre 100 et 1000 et qui consiste dans un éther glycidique obtenu en faisant réagir avec de l'épichlorhydrine un polyphénol non chloré ou non bromé sur le (ou les) noyau(x) aromatique(s) choisi dans le groupe des phénols dont on a parlé ci-avant à propos de la définition de la résine (f1).

On choisit de préférence une résine époxy non halogénée possédant un poids d'équivalent époxy compris entre 150 et 300. On utilise tout préférentiellement une résine époxy (f4) consistant dans une résine appartenant à la famille des éthers glycidiques des bis(hydroxyphényl)alcanes,non halogénés sur les noyaux aromatiques, dont on a parlé ci-avant à propos de la définition détaillée de la résine (f1).

A titre d'exemples spécifiques d'alkénylphénols (f5) de formule (VIII), on peut citer en particulier :

- le dihydroxy-4,4′ diallyl-3,3′ bisphényle,
- le bis(hydroxy-4 allyl-3 phényl)méthane,
- le bis(hydroxy-4 allyl-3 phényl)éther,
- le bis(hydroxy-4 allyl-3 phényl)-2,2 propane ou O,O'-diallyl-bisphénol A,
- l'éther méthylique correspondant à l'un ou l'autre des alkénylphénols précités.

Les alkénylphénols se préparent, ainsi que cela est bien connu, par transposition thermique (claisen) des éthers allyliques de phénols, lesquels éthers allyliques sont obtenus de manière connue en soi en faisant réagir par exemple des phénols et le chlorure d'allyle en présence d'un hydroxyde de métal alcalin et de solvants.

A titre de réactif acrylate (F6) qui convient, on peut citer

- (1) les mono(méth)acrylates correspondant à la formule (IX) dans laquelle :
  . n = 1, et
  . B représente un radical organique monovalent de formule :

$$-(CH_2\ CH_2O)_m - B_1 \qquad (XI)$$

dans laquelle : $B_1$ représente un radical alkyle, linéaire ou ramifié, ayant de 1 à 6 atomes de carbone ou un radical phényle ; et m est un nombre entier égal à zéro, 1, 2, 3, 4 ou 5 ;

- (2) les di(méth)acrylates correspondant à la formule (IX) dans laquelle :
  . n = 2, et
  . B représente un radical organique divalent de formule :

$$-(CH_2\ CH_2O)_p - B_2 - (OCH_2\ CH_2)_q - \qquad (XIII)$$

dans laquelle : $B_2$ représente un radical divalent alkylène, linéaire ou ramifié, ayant de 2 à 9

atomes de carbone et pouvant renfermer un ou plusieurs pont(s) oxygène ou un radical de formule

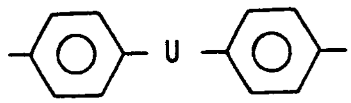

dans laquelle le symbole U représente un lien valentiel simple ou un groupement : $-CH_2-$, $CH_2-CH_2-$, $-CH(CH_3)CH_2-$,

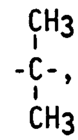

-O-,

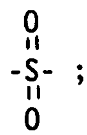

les symboles p et q, identiques ou différents, représentent chacun un nombre entier égal à zéro, 1, 2, 3, 4 ou 5 ;

- (3) les tri- et tétra(méth)acrylates correspondant à la formule (IX) dans laquelle :
  . n = 3 ou 4, et
  . B représente un radical organique trivalent ou tétravalent dérivé d'un reste aliphatique saturé, linéaire ou ramifié, ayant de 3 à 20 atomes de carbone et pouvant renfermer un ou plusieurs pont(s) oxygène et/ou une ou plusieurs fonction(s) hydroxyle(s) libre(s) ;
- (4) les (méth)acrylates d'époxy novolaques qui, tout en correspondant à la formule (IX), sont représentés ici par la formule suivante :

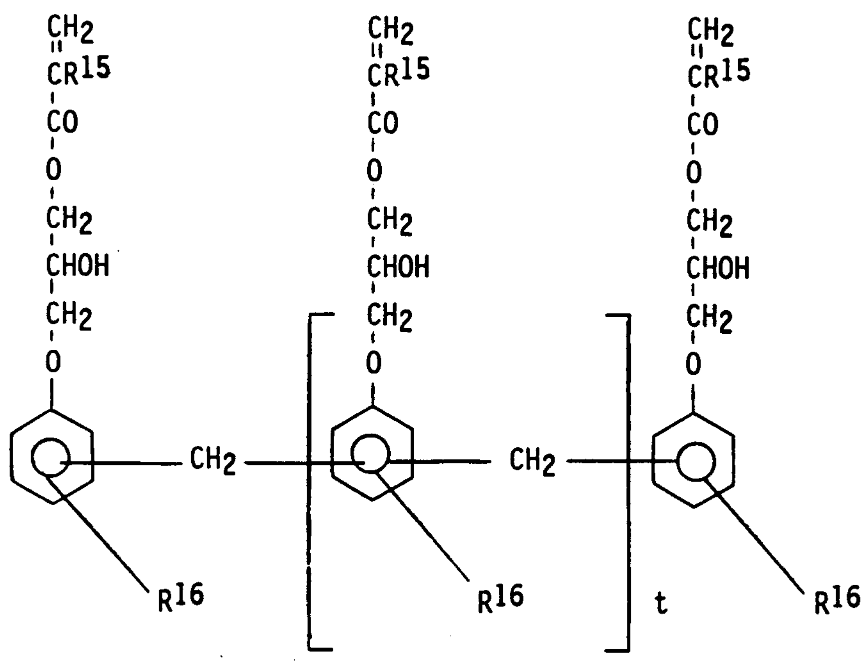

(XIV)

dans laquelle :

. le symbole $R^{15}$ a la signification donnée ci-avant à propos de la formule (IX) ;
. le symbole $R^{16}$ représente un atome d'hydrogène ou un radical méthyle ;
. t est un nombre entier ou fractionnaire se situant dans l'intervalle allant de 0,1 à 7 ;

- (5) des mélanges de plusieurs acrylates et/ou méthacrylates d'un même type [(1), (2), (3) ou (4)] entre eux ou des mélanges d'un ou plusieurs acrylate(s) et/ou méthacrylate(s) d'un même type avec un ou plusieurs acrylate(s) et/ou méthacrylate(s) d'un autre type.

A titre d'exemples spécifiques de réactif acrylate (1) qui conviennent bien, on peut citer en particulier : les mono(méth)acrylates de méthyle ; les mono(méth)acrylates de phénol(mono-oxyéthylé) ; les mono-(méth)acrylates de phénol (di-oxyéthylé).

A titre d'exemples spécifiques de réactif acrylate (2) qui conviennent bien, on peut citer : les di(méth)-acrylates d'éthylèneglycol ; les di(méth)acrylates de butanediol-1,4 ; les di(méth)acrylates d'hexanediaol-1,6 ; les di(méth)acrylates de tripropylèneglycol ; les di(méth)acrylates des diphénols, di (mono- ou poly-oxyéthylés) ou non, suivants : le dihydroxy-4,4'-diphénylméthane, le bisphénol A, le dihydroxy-4,4'-diphényléther et en particulier les di(méth)acrylates de bisphénol A di(mono-oxyéthylé) ou les di(méh)-acrylates de bisphénol A di (di-oxyéthylé) [cf. formule (XIII) dans laquelle $B_2$ représente le radical :

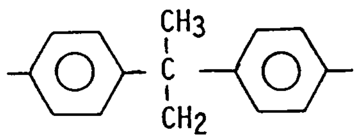

et p = q = 1 ou 2].

A titre d'exemples spécifiques de réactif acrylate (3) qui conviennent bien, on peut citer en particulier : les tri(méth)acrylates de butanetriol-1,2,4 ; les tri(méth)acrylates d'hexanetriol-1,2,6 ; les tri(méth)acrylates de triméthylolpropane ; les tri(méth)acrylates de pentaérythritol ; les tétra(méth)acrylates de pentaérythritol.

Les (méth)acrylates d'époxy novolaques (4) sont des produits connus dont certains sont disponibles dans le commerce. Ils peuvent être préparés en faisant réagir les acides (méth)acryliques avec une résine époxy de type novolaque, cette dernière étant le produit de réaction d'épichlorhydrine et de polycondensats phénol/formol [dans la formule (XIV) donnée ci-avant $R^{16}$ est alors une atome d'hydrogène] ou de polycondensats crésol/formol [dans la formule $R^{16}$ est alors un radical méthyle]. Ces polyacrylates oligomères (4) et un procédé pour les préparer se trouvent décrits par exemple dans le brevet américain US-A-3.535.403.

A titre d'exemples spécifiques de réactif acrylate (4) qui conviennent bien, on peut citer en particulier les acrylates d'époxy novolaques de formule (XIV) dans laquelle $R^{15}$ et $R^{16}$ représentent un atome d'hydrogène et t est un nombre entier ou fractionnaire se situant dans l'intervalle allant de 0,1 à 5.

A titre d'exemples spécifiques de réactif acrylate (5) qui conviennent bien, on peut citer les mélanges des (méth)acrylates d'époxy novolaques (4) avec au plus 30 % en poids, par rapport au poids du mélange (4) + (3), d'un triacrylate et/ou d'un triméthacrylate répondant aux définitions données ci-avant à propos du réactif acrylate (3) et en particulier les mélanges des acrylates d'époxy novolaques convenant bien, juste cités ci-avant, avec au plus 25 % en poids, par rapport au poids du mélange, d'un triacrylate et/ou d'un triméthacrylate convenant bien choisi parmi ceux juste cités ci-avant.

Le réactif acrylate (f6) qui est utilisé de manière très préférentielle est pris dans le groupe formé par : les di(méth)acrylates de bisphénol A di(mono-oxyéthylé) ; les di(méth)acrylates de bisphénol A di(di-oxyéthylé) ; les acrylates d'époxy novolaques de formule (XIV) dans laquelle $R^{15}$ et $R^{16}$ représentent un atome d'hydrogène et t est un nombre entier ou fractionnaire se situant dans l'intervalle allant de 0,1 à 5, ces composés étant pris seuls ou en mélange avec au plus 25 % en poids, par rapport au poids du mélange, de triacrylate de triméthylolpropane.

Les polymères selon la présente invention peuvent être obtenus en ajoutant aux composés (a) et (b) [avec éventuellement les composés (c) et/ou (d) et/ou (f)] au moins un composé (g) consistant en un N,N'-bis-maléimide renfermant dans sa structure un groupement diorganosiloxane.

On utilise comme réactif (g) un N,N'-bis-maléimide à groupement diorganopolysiloxane répondant essentiellement à la formule générale :

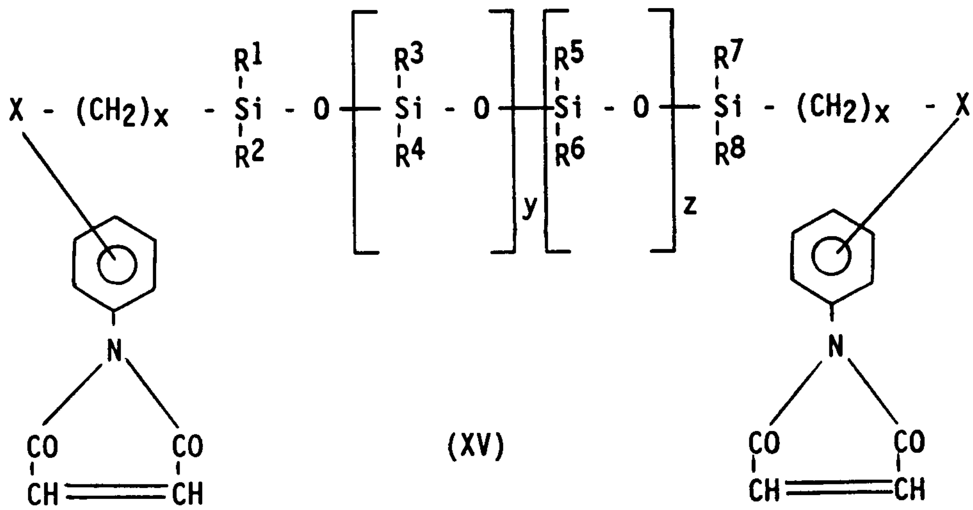

(XV)

dans laquelle :

- X, qui est est position ortho, méta ou para par rapport à l'atome de carbone du cycle benzénique relié à l'azote, représente un lien valentiel simple ou un atome ou un groupement suivant : - O - ; - S - ;

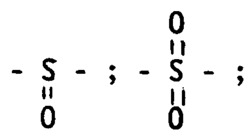

- $R^1$, $R^2$, $R^3$, $R^4$, $R^5$, $R^6$, $R^7$, $R^8$, identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement -CN ; un radical phényle éventuellement substitué par un ou plusieurs radicaux alkyles et/ou alkoxy ayant de 1 à 4 atomes de carbone ou par un ou plusieurs atomes de chlore ;
- le symbole x est un nombre entier situé dans l'intervalle allant de 2 à 8 ;
- les symboles y et z représentent des nombres, identiques ou différents, entiers ou fractionnaires, dont la somme se situe dans l'intervalle allant de 0 à 100.

Dans les bis-maléimides siloxanes (g) de formule (XV), lorsque y et/ou z sont supérieurs à 1, on est en présence d'un composé à structure polymère et on a rarement un seul composé, mais le plus souvent un mélange de composés de même structure chimique, qui diffèrent par le nombre d'unités récurrentes de leur molécule ; cela conduit à une valeur moyenne de y et/ou z qui peut être entière ou fractionnaire.

Comme bis-maléimides siloxanes (g) qui conviennent, on peut citer ceux qui répondent à la formule (XV) dans laquelle :

1) X = - 0 - ; $R^1$ = $R^2$ = $R^3$ = $R^4$ = $R^5$ = $R^6$ = $R^7$ = $R^8$ = radical alkyle linéaire ayant de 1 à 3 atomes de carbone ; x = 2, 3 ou 4 ; y + z se situe dans l'intervalle allant de 0 à 100 et, de préférence, de 4 à 70.

2) X = - 0 - ; $R^1$ = $R^2$ = $R^3$ = $R^4$ = $R^7$ = $R^8$ = radical alkyle linéaire ayant de 1 à 3 atomes de carbone ; $R^5$ = $R^6$ radical phényle ; x = 2, 3 ou 4; y + z se situe dans l'intervalle allant de 0 à 100 et, de préférence, de 4 à 70.

3) X = - 0 - ; $R^1$ = $R^2$ = $R^7$ = $R^8$ = radical alkyle linéaire ayant de 1 à 3 atomes de carbone ; $R^3$ = $R^4$ = $R^5$ = $R^6$ = radical phényle ; x = 2, 3 ou 4 ; y + z se situe dans l'intervalle allant de 0 à 100 et, de préférence, de 4 à 70.

4) X = - O - ; $R^1$ = $R^2$ = $R^3$ = $R^5$ = $R^7$ = $R^8$ = radical alkyle linéaire ayant de 1 à 3 atomes de carbone ; $R^4$ = $R^6$ = radical phényle ; x = 2, 3 ou 4 ; y + z se situe dans l'intervalle allant de 0 à 100 et, de préférence, de 4 à 70.

5) X = - O - ; $R^1$ = $R^3$ = $R^5$ = $R^7$ = radical alkyle linéaire ayant de 1 à 3 atomes de carbone ; $R^2$ = $R^4$ = $R^6$ = $R^8$ = radical phényle ; x = 2, 3 ou 4 ; y + z se situe dans l'intervalle allant de 0 à 100 et,

de préférence, de 4 à 70.

Comme exemples spécifiques de bis-maléimides siloxanes (g) qui conviennent on citera notamment :

6)

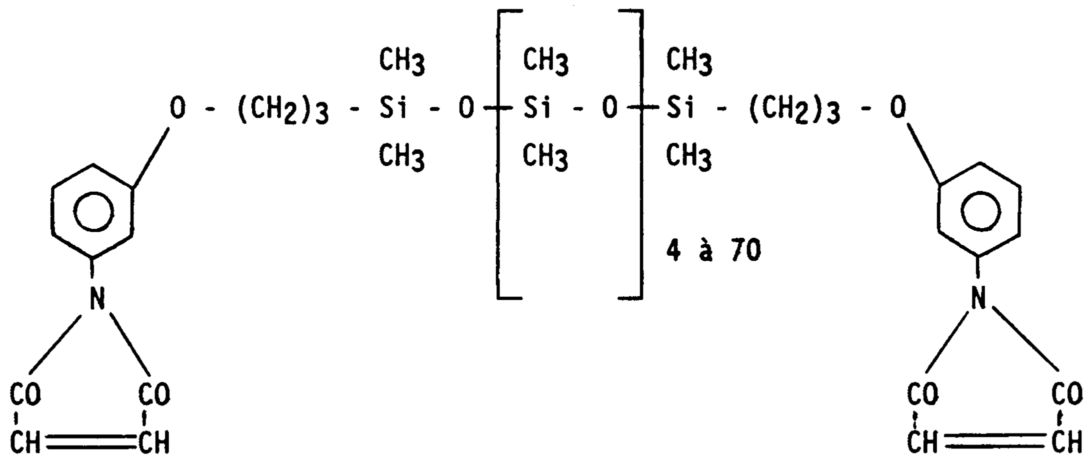

7)

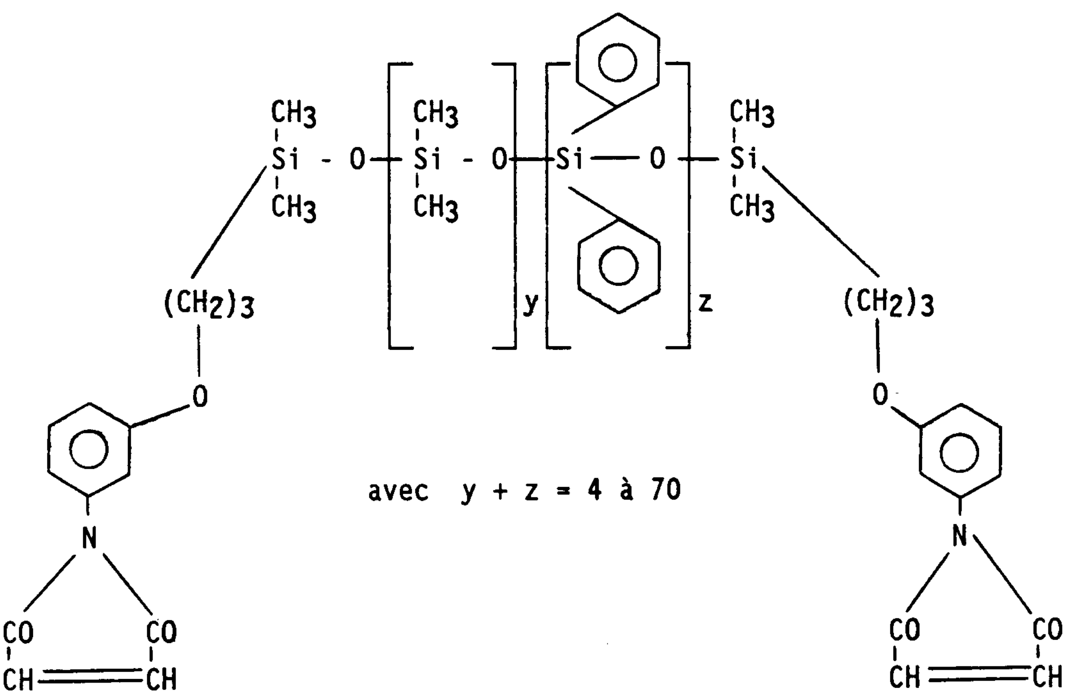

8)

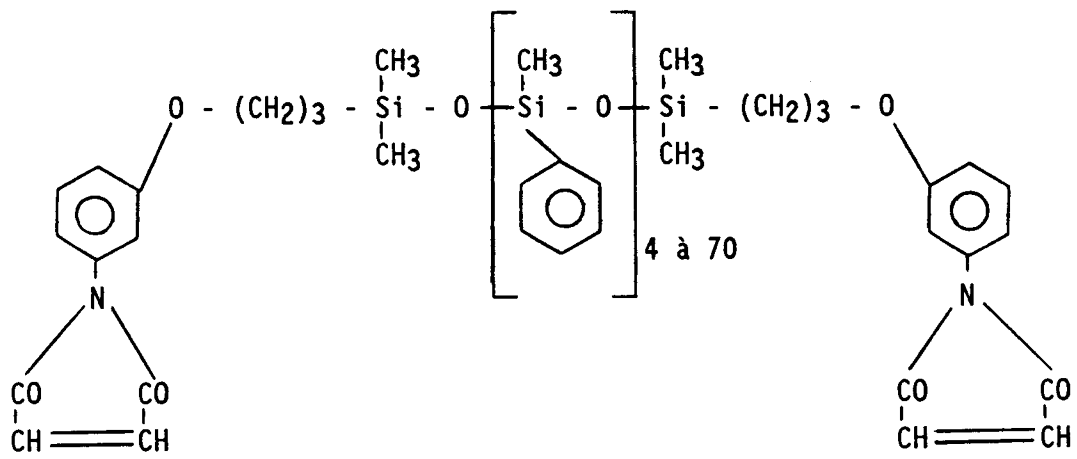

9)

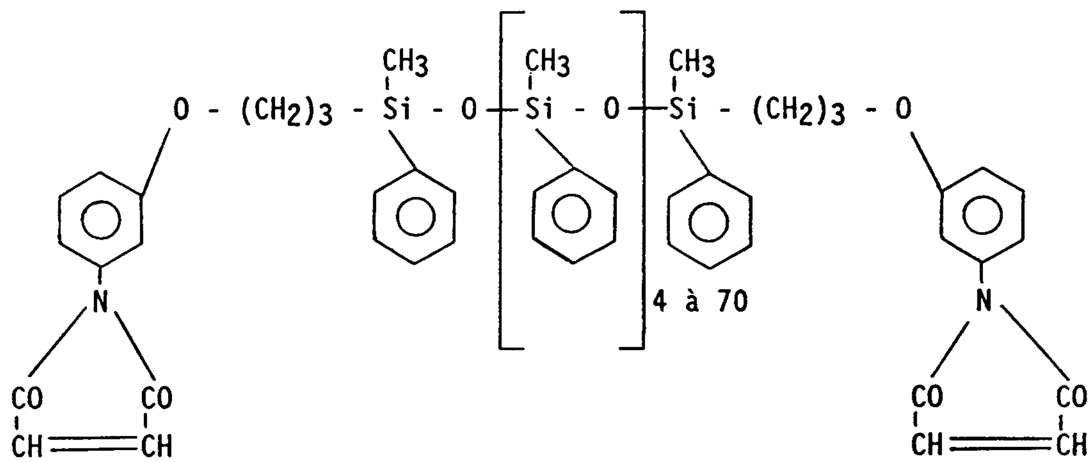

Les bis-maléimides siloxane de formule (XV) sont des composés qui sont obtenus en faisant réagir l'anhydride maléique, en présence d'un agent déshydratant, d'une ami ne tertiaire, d'un diluant organique et d'un catalyseur, sur une diamine à groupement diorganopolysiloxane de formule :

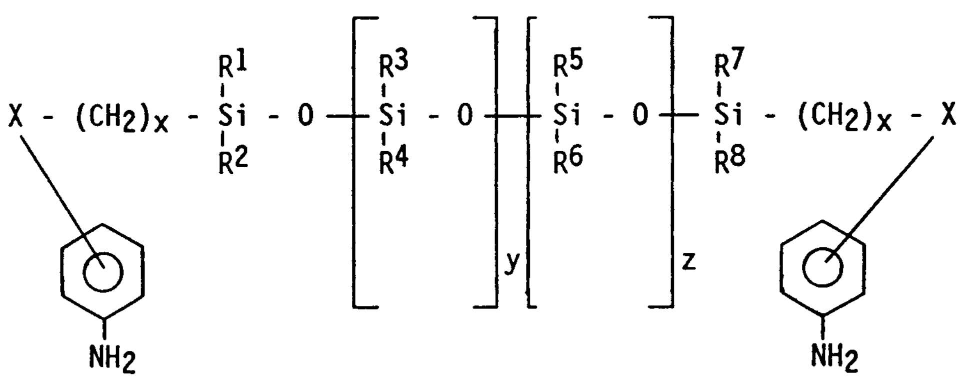

dans laquelle X, $R^1$, $R^2$, $R^3$, $R^4$, $R^5$, $R^6$, $R^7$, $R^8$, x, y et z ont les significations données ci-avant pour la formule (XV). Pour avoir plus de détails sur ces bis-maléimides siloxanes et sur leur procédé de

préparation, on pourra se reporter en particulier au contenu de la demande de brevet français FR-A-2 611 728.

La quantité de réactif (g) de formule (XV) engagée pour la préparation des polymères selon la présente invention est comprise entre 1 et 40 %, de préférence entre 5 et 30 %, du poids total des réactifs (a) + (b) + éventuellement (c) + éventuellement (d) + éventuellement (e) + éventuellement (f).

Les polymères selon la présente invention ne présentent pas de ramollissement notable au-dessous de la température à laquelle ils commencent à se dégrader. Ils sont insolubles dans les solvants choisis parmi les hydrocarbures aromatiques comme les xylènes et le toluène, les hydrocarbures halogénés comme les chlorobenzènes, les solvants polaires comme le dioxanne, le tétrahydrofuranne et l'oxyde de dibutyle, le diméthylformamide, le diméthylsulfoxyde, la N-méthylpyrrolidone, le diméthylacétamide.

Cependant avant d'obtenir les polymères selon la présente invention, pendant leur préparation, on obtient des produits dits prépolymères qui peuvent être isolés, cristalliser et être broyés, ces dits prépolymères étant solubles dans les solvants organiques polaires décrits ci-avant. Ces prépolymères présentent un point de ramollissement à une température inférieure à 200 ° C (en général ce point de ramollissement est compris entre 50 et 150 ° C). pour obtenir ces prépolymères, on met en contact, sous agitation, dans un réacteur les composés (a) + (b) + éventuellement (c) et/ou (d) et/ou (f) et/ou (g), éventuellement en présence de solvant(s), à des températures comprises entre 50 et 180 ° C, de préférence entre 80 et 170 ° C.

Ainsi, les polymères selon la présente invention peuvent être préparés à l'état fondu, en masse, en chauffant le mélange des composés jusqu'à l'obtention d'un produit homogène ou pâteux à la température indiquée ci-avant pendant une durée qui peut aller de quelques minutes à quelques heures, cette durée étant d'autant plus brève que la température adoptée est plus élevée. La viscosité de tels prépolymères obtenus à l'état fondu peut être aisément ajustée à la valeur souhaitée comprise par exemple entre 0,1 et 50 Pa.s, en jouant notamment sur la nature et les proportions respectives des composés mis en oeuvre, ainsi que sur la température et la durée des étapes au cours desquelles les composés sont introduits dans le réacteur.

Les prépolymères selon la présente invention peuvent également être préparés en présence de solvants tels que par exemple le diméthylacétamide, la N-méthylpyrrolidone, le diméthylformamide, la cyclohexanone.

Ces prépolymères, après chauffage entre 180 et 300 ° C, conduisent aux polymères selon la présente invention.

Divers adjuvants peuvent être incorporés dans les prépolymères selon l'invention. Ces adjuvants, habituellement utilisés et bien connus de l'homme de l'art, peuvent être par exemple des stabilisants ou des inhibiteurs de dégradation, des lubrifiants ou des agents de démoulage, des colorants ou des pigments, des charges pulvérulentes ou en particules comme des silicates, des carbonates, le kaolin, la craie, le quartz pulvérisé, le mica ou des microbilles de verre. On peut aussi incorporer des adjuvants modifiant la structure physique du produit obtenu comme par exemple des agents porogènes ou des agents de renforcement fibreux tels que notamment des fibrilles de carbone, de polyimide, de polyamides aromatiques, des whiskers.

A l'état de liquide homogène, les prépolymères selon l'invention peuvent être utilisés directement par exemple pour l'imprégnation de conducteurs ou pour faire des moulages par simple coulée à chaud. On peut aussi, après refroidissement et broyage, employer ces prépolymères à l'état de poudres par exemple pour l'obtention d'objets moulés par compression, éventuellement en association avec des charges fibreuses ou pulvérulentes. Les prépolymères peuvent également être utilisés en solution pour la préparation de revêtements, de collages, de matériaux stratifiés dont le squelette peut être sous forme de nappes tissées ou non tissées, d'éléments unidirectionnels ou de fibres coupées naturelles ou synthétiques tels que par exemple les filaments ou fibres de verre, de bore, de carbone, de tungstène, de silicium, de polyamide-imide ou de polyamide aromatique.

Notamment, sous la forme de suspensions ou de solutions, ces prépolymères (P) peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicarbonamide.

Les prépolymères selon la présente invention présentent un intérêt pour l'obtention d'articles intermédiaires préimprégnés sans solvant. L'imprégnation du matériau fibreux peut être effectuée par application des techniques usuelles telles que l'immersion, l'enduction au racle ou au rideau ou l'imprégnation par transfert. Le film transférable et les articles préimprégnés peuvent être utilisés directement ou bien être

emmagasinés en vue d'un emploi ultérieur. Ils conservent remarquablement leurs propriétés au cours d'un stockage au froid entre 0 et 10 °C. Les prépolymères utilisés pour cette application présentent de préférence une viscosité à l'état fondu comprise entre 2 Pa.s et 50 Pa.s.

Les matériaux préimprégnés sont utilisables pour la réalisation de pièces ayant des formes et des fonctions variées dans de nombreuses industries comme par exemple dans l'aéronautique. Ces pièces qui peuvent être des pièces de révolution sont obtenues par placage de plusieurs couches de préimprégnés sur une forme ou un support.

On effectue ensuite la réticulation dans les conditions technologiques habituelles relatives aux matériaux composites et en particulier à des températures comprises entre 180 et 300 °C.

On peut utiliser aussi les préimprégnés comme renforts ou moyens de réparation de pièces détériorées.

Mais il est aussi possible de concevoir des pièces selon la technique de l'enroulement filamentaire avec ou sans support, destinée à la réalisation de pièces de révolution, technique utilisée notamment pour faire des pièces relevant des industries automobile et aéronautique. Les prépolymères mis en oeuvre dans cette technique présentent de préférence une viscosité à l'état fondu comprise entre 0,1 Pa.s et 2 Pa.s.

Dans un second stade, les prépolymères peuvent être durcis par chauffage jusqu'à des températures de l'ordre de 300 °C, généralement comprises entre 180 ° et 250 °C. On obtient alors les polymères selon la présente invention, éventuellement fixés à un support. Une mise en forme complémentaire peut être effectuée pendant le durcissement, éventuellement sous vide ou sous une pression super-atmosphérique, ces opérations pouvant également être consécutives. Le durcissement peut être effectué en présence d'un initiateur de polymérisation radicalaire tel le péroxyde de lauroyle, l'azobisisobutyronitrile ou d'un catalyseur de polymérisation anionique tel que le diazabicyclooctane.

Les polymères selon l'invention intéressent les domaines de l'industrie qui requièrent des matériaux doués de bonnes propriétés mécaniques et électriques ainsi que d'une grande inertie chimique à des températures de 200 ° à 300 °C. Ils peuvent ainsi être utilisés notamment en électronique. A titre d'exemples, ils conviennent pour la fabrication d'isolants ou plaques ou tubulaires pour transformateurs électriques, de supports de circuits imprimés, de pignons, de bagues etc... Ces polymères sont plus particulièrement adaptés à une mise en oeuvre par injection dans des renforts compacts constitués par des fibres minérales ou organiques tressées dans plusieurs directions. Cette technique nécessite des temps d'injection très longs compte tenu de la compacité des renforts et demande donc une matière polymère fluide pour assurer une bonne pénétration dans le renfort et présentant une faible viscosité qui doit peu évoluer dans le temps à la température choisie pour réaliser l'injection (par exemple de l'ordre de 70 ° à 110 °C).

Les exemples suivants sont donnés à titre illustratif, mais non limitatif.

EXEMPLE N ° 1 :

On utilise un appareillage constitué par un réacteur de 100 $cm^3$ en verre, muni d'une agitation centrale et d'une tubulure latérale permettant la charge des réactifs. Le réacteur contenant :

- 11,4 g d'allyl-4 diéthyl-2-6 aniline,
- 2,7 g de cyclohexanone et
- 2,7 g de N-vinylpyrrolidone,

est placé dans un bain d'huile chauffé à 155 °C. Après 30 secondes de chauffage, on charge sous agitation, en 6 minutes et 30 secondes 43,2 g de N,N′-4,4′-diphénylméthane-bis-maléimide. Au bout de 6 minutes, la masse réactionnelle est liquide. On continue la réaction encore 9 minutes à 150 °C. La résine obtenue est coulée sur un plateau métallique à température ambiante. Après solidification, elle est broyée.

Dans un becher de 250 $cm^3$ on dissout 44 g de cette résine broyée dans un mélange constitué de 27 g de diméthylformamide et 9 g de N-méthylpyrrolidone. Il suffit d'une heure d'agitation à température ambiante pour obtenir un collodion homogène de viscosité 240 mPa.s à 25 °C.

Un tissu de verre réf. 7628, commercialisé par la Société PORCHER à 200 $g/m^2$, traité amminosilane, est enduit avec le collodiun obtenu ci-avant. Le dépôt est de 25,6 g pour un rectangle de 33 x 32 cm. Le tissu enduit, tendu sur un cadre, est placé 7 minutes en étuve ventilée, thermostatée à 150 °C, pour éliminer le solvant. On obtient ainsi un tissu préimprégné appelé "prépreg".

On fabrique un stratifié cuivré à partir de 6 plis de prépregs et 2 feuilles de cuivre traitées sur une face, de marque YATES (Ref. NT-TWS). L'assemblage est passé sous 40 bars, 15 minutes à 150 °C, puis 1 heure 15 minutes à 180 °C. Il est recuit 16 heures à 200 °C. On obtient un statifié ou "clad".

L'adhésion du cuivre sur le statifié est mesurée au dynamomètre ; la résistance au pelage est de 2 kg/cm. Après un séjour du clad de 5 minutes à 288 °C, cette valeur est de 1,5 kg/cm.

EXEMPLE 2 :

On utilise un appareillage constitué par un réacteur de 200 $cm^3$ en verre, muni d'une agitation centrale et d'une tubulure latérale permettant la charge de réactifs ou le dégazage. Cette tubulure est reliée à une pompe à vide par l'intermédiaire de pièges refroidis par un mélange acétone + glace carbonique. Le réacteur contenant :

- 55,04 g d'ally-4-diéthyl-2-6 aniline,
- 0,80 g de cyclohexanone et
- 0,16 g d'imidazole

est placé dans un bain d'huile chauffé à 150 ° C. Après une minute de chauffage, on charge sous agitation, en 5 minutes, 104 g de N,N′-diphénylméthane-bis-maléimide. Au bout de 2 minutes, la masse réactionnelle est limpide. On continue la réaction 3 minutes et demie sous presssion atmosphérique et 3 minutes et demie sous pression réduite de 1 330 Pa. La résine obtenue est coulée dans des moules préchauffés à 150 ° C et constitués par deux plaques chromées rectangulaires séparées par un entrefer de 4 mm d'épaisseur.

La réticulation de la résine contenue dans le moule est effectuée à pression atmosphérique en étuve chauffée selon le cycle thermique suivant :

- maintien à 150 ° C pendant 1 heure,
- montée de 150 à 200 ° C en 50 minutes,
- maintien à 200 ° C pendant 2 heures,
- montée de 200 à 250 ° C en 50 minutes,
- maintien à 250 ° C pendant 16 heures,
- montée de 250 à 300 ° C en 20 minutes,
- maintien à 300 ° C pendant 2 heures,
- refroidissement à température ambiante en 2 heures.

Après démoulage, on découpe des éprouvettes pour la détermination des propriétés :

- en flexion, selon la norme ASTM D-790.
  On trouve une résistance à la rupture (Rf) de 123 Mpa et un Module (Mf) de 3,2 Gpa.
- en résilience, selon la norme ASTM E 399.
  On trouve
  K1C = 0,450 Mpa $\sqrt{m}$
  G1C = 57 $J/m^2$.

La mesure de la dilatation en fonction de la température permet de déterminer le point de transition vitreuse (Tg) à 221 ° C.

EXEMPLE 3 :

On utilise l'appareillage décrit à l'exemple 2. Le réacteur contenant 23,19 g d'allyl-4-diéthyl-2-6-aniline est placé dans un bain d'huile chauffé à 150 ° C. Après 1 minute de chauffage, on introduit 44,33 g de N,N′-4-4′-diphénylméthane-bis-maléimide en 4 minutes. On laisse réagir 5 minutes. La masse réactionnelle est dégazée sous pression réduite (2 660 Pa) pendant 2 minutes. On introduit alors une solution constituée par 0,4 g de cyclohexanone + 0,08 g d'imidazole. On laisse réagir 2 minutes et on introduit, en 3 minutes, 12 g de NN′-bis-maléimide à groupement diorganopolysiloxane préchauffé à 80 ° C, dont la formule est :

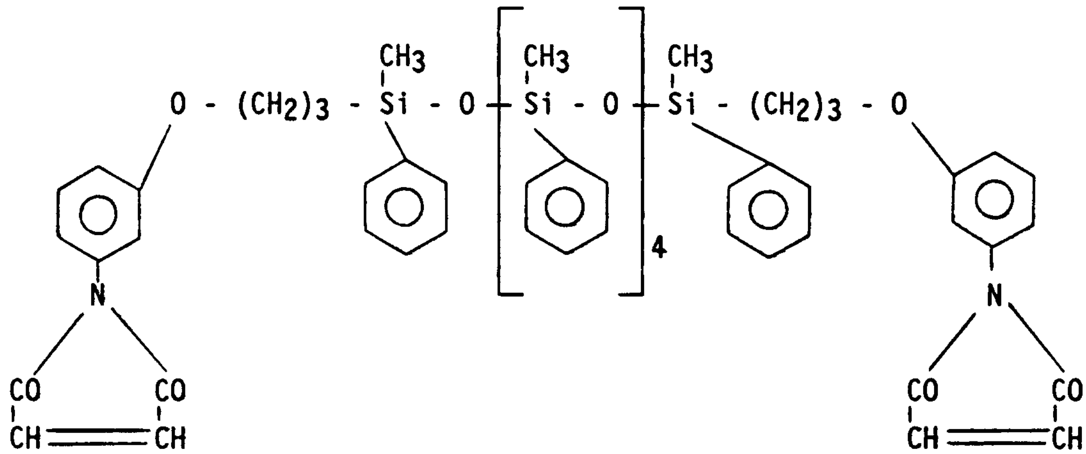

ce composé étant préparé selon l'exemple 4 du FR-A-2.611.728.

La masse réactionnelle est à nouveau dégazée pendant 2 minutes sous pression réduite (2 660 Pa).

La résine obtenue est coulée dans un moule à 150 ° C et réticulée selon le cycle thermique décrit à l'exemple 2.

| | |
|---|---|
| Mesure de la résilience | :K1C = 0,590 MPa √ m |
| | G1C = 154 J/m$^2$ |
| Point de transition | : 206 ° C. |

EXEMPLE 4 :

On charge 16,7 g d'allyl-4-diéthyl-2-6-aniline dans un réacteur en verre de 100 ml muni d'un agitateur en acier inoxydable de type ancre et d'une tubulure latérale permettant le départ des produits volatils. Le réacteur est placé dans un bain à 160 ° C. Après 30 secondes, sous agitation, on charge 63,3 g de NN'-diphénylméthane-bis-maléimide. On laisse réagir 6 minutes et demie. La masse réactionnelle est limpide 6 minutes après la fin d'addition. On laisse réagir encore 7 minutes, les cinq dernières sous pression absolue de 1 330 pa pour dégazer. La résine est coulée dans un moule parallélépipédique de 140 x 100 x 4 mm préchauffé à 150 ° C. Le cycle de cuisson est le même que celui selon l'exemple 2.

En opérant selon la norme ASTM D 790, on trouve pour le polymère obtenu :

- à 250 ° C Rf = 151 MPa
  Mf = 3,77 GPA
- à 200 ° C Rf = 102 MPa
  Mf = 2.64 GPa
- à 200 ° C Rf = 102 MPa
  Mf = 2.58 GPA.

Pour la résilience, déterminée selon la norme ASTM E 399, on trouve :

K1C = 0,500 Mpa √ m

G1C = 78 J/m$^2$.

D'après la mesure TMA la Tg est de 263 ° C.

Une cuisson supplémentaire de 2 heures à 300 ° C permet de monter la Tg à 312 ° C.

EXEMPLE 5 :

Dans le même appareil que celui décrit à l'exemple 4, on charge 16,56 g d'allyl-4-diéthyl 2-6 aniline et une solution contenant 0,5 g de cyclohexanone et 0,1 g d'imidazole. Le réacteur est placé dans un bain à 150 ° C. Après une minute d'agitation, on ajoute en 4 minutes le mélange pulvérulent de :

- 66,27 g de NN'44'diphénylméthane-bis-maléimide et
- 16,56 g de 44'méthylène-bis(2-6 diéthylamine).

La masse réactionnelle est limpide au bout de 8 minutes. On dégaze sous pression absolue de 3 300 Pa pendant 3 minutes. Une partie de la résine obtenue est coulée dans un moule à 150 ° C et subit le cycle de cuisson selon l'exemple 2, jusqu'à 16 heures à 250 ° C, puis refroidissement à température ambiante en 2 heures. L'autre partie est refroidie ; à 80 ° C, sa viscosité est de 7,65 mPa.s. A température ambiante, elle est toujours limpide et très collante.

On mesure la résistance et le module de flexion du polymère obtenu après sa coulée dans le moule et qu'il ait subit le cycle de cuisson :

- à 25 ° C : Rf = 108 MPa , Mf = 3,48 GPa
- à 200 ° C : Rf = 44 MPa , Mf = 1,23 GPa.

D'après la mesure TMA, la Tg est de 215 ° C.

## Revendications

**Revendications pour les Etats contractants suivants : AT, BE, CH, DE, DK, FR, GB, GR, IT, LI, LU, NL, SE**

**1.** Polymères à groupements imides caractérisés en ce qu'ils comprennent le produit de réaction entre :

(a) un N,N'-bis-imide ou une association de plusieurs bis-imides de formule :

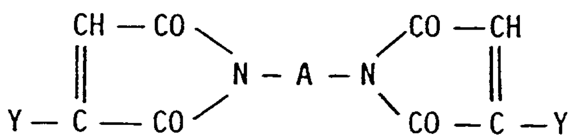

(I)

dans laquelle :

. le symbole Y représente H, $CH_3$ ou Cl

. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; méthyl-6 phénylène-1,3 ; diéthyl-2,5 méthyl-3 phénylène-1,4 ; et les radicaux de formule :

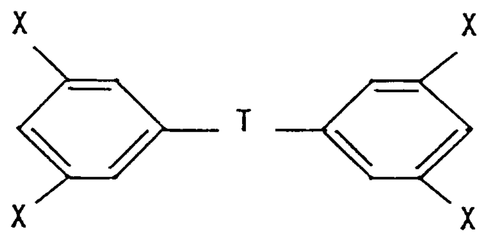

dans laquelle T représente un lien valentiel simple ou un groupement :

- $CH_2$- ;

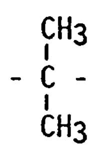 ;

- O - ;

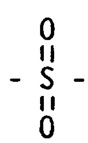 ; 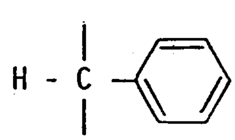 ; 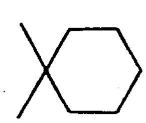 ;

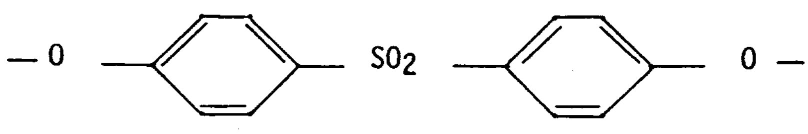

et X représente un atome d'hydrogène, un radical méthyle, éthyle ou isopropyle ;
(b) une ou plusieurs p-allylaniline(s) de formule :

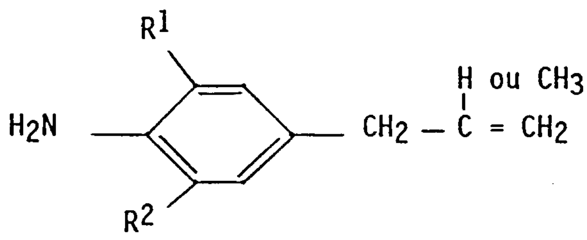

(II)

dans laquelle les groupements $R^1$ et $R^2$, identiques ou différents, représentent des groupements alkyles en C1 à C4, comme par exemple les groupements méthyle, éthyle, propyle, isopropyle, butyle.
(c) éventuellement en présence d'un composé (c) choisi parmi :

- les péroxydes organiques,
- l'azobisisobutyronitrile,
- un dérivé de l'imidazole de formule générale

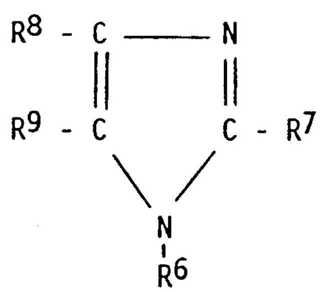

dans laquelle $R^6$, $R^7$, $R^8$ et $R^9$, identiques ou différents, représentent chacun : un atome d'hydrogène, un radical alkyle ou alcoxy ayant de 1 à 20 atomes de carbone, vinyle, phényle, nitro, $R^8$ pouvent former avec $R^9$ et les atomes de carbone auxquels sont liés ces radicaux un cycle unique comme par exemple un cycle benzénique, $R^6$ pouvant également représenter un groupement carbonyle lié à un deuxième cycle imidazole.

(d) éventuellement en présence d'un composé (d) choisi parmi les vinylpyridines, la N-vinylpyrrolidone, l'isocyanurate d'allyle, le vinyltétrahydrofuranne et leurs mélanges;
les quantités de N,N'-bis-imide (a) et de p-allylaniline (b) étant choisies de façon à ce que le raport:

$$\frac{\text{nombre de moles de (a)}}{\text{nombre de moles de groupements } NH_2}$$

soit compris entre 20 et 0,1;
le composé (c), lorsqu'il est utilisé, représentant de 0,01 à 6 % du poids de la somme des composés (a) + (b); et
le composé (d), lorsqu'il est utilisé, représentant moins de 50 %, en poids, de la somme des composés (a) + (b).

**2.** Polymères selon la revendication 1, caractérisés en ce que les quantités de NN'-bis-imide (a) et de p-allylaniline (b), sont choisies de façon à ce que le rapport :

$$\frac{\text{nombre de moles de (a)}}{\text{nombre de moles de groupements } NH_2}$$

soit compris entre 5 et 0,5,

- en ce que le composé (c), lorsqu'il est utilisé, représente, de 0,1 à 3 %, du poids, de la somme des composés (a) + (b),
- et en ce que le composé (d), lorsqu'il est utilisé, représente de 1 à 25 %, en poids, de la somme des composés (a) + (b).

**3.** Polymère selon l'une quelconque des revendications 1 ou 2, caractérisé en ce qu'il est obtenu en ajoutant aux composés (a) et (b) avec éventuellement (c) et éventuellement (d) :
un composé (e) consistant en une ou plusieurs diamines biprimaires choisies parmi :
i) les espèces répondant à la formule générale :

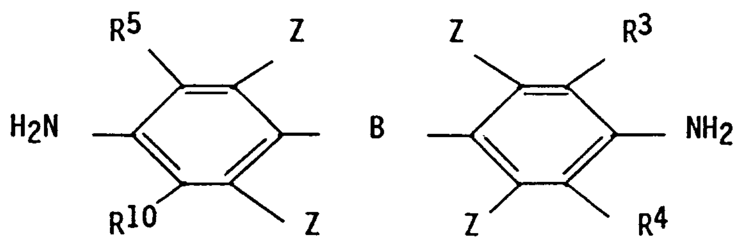

(IV)

dans laquelle :

. les symboles $R^5$, $R^{10}$, $R^3$ et $R^4$, identiques ou différents, représentent chacun un radical méthyle, éthyle, propyle ou isopropyle ;
. les symboles Z, identiques ou différents, représentent chacun un atome d'hydogène ou un atome de chlore ;
. le symbole B représente un radical divalent choisi dans le groupe formé par les radicaux : $-CH_2-$,

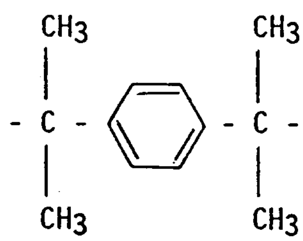 et 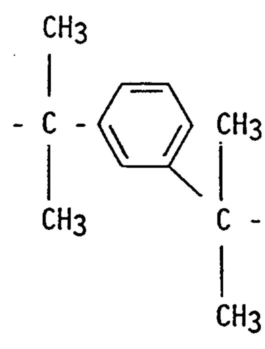

(2i) et les espèces répondant à la formule générale :

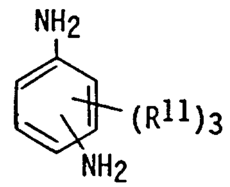

(III)

dans laquelle :

. les radicaux amino sont en position méta ou para, l'un par rapport à l'autre ;

. les symboles $R^{11}$, identiques ou différents, représentent chacun un radical méthyle, éthyle, propyle ou isopropyle,

(3i) les espèces consistant dans une ou plusieurs guanamine(s) substituée(s) de formule :

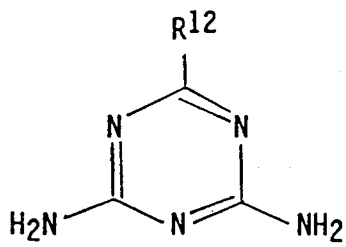

(V)

dans laquelle le symbole $R^{12}$ représente : un radical alkyle, linéaire ou ramifié, comportant de 1 à 12 atomes de carbone, comme par exemple un radical méthyle, éthyle, propyle, butyle, pentyle, hexyle, heptyle, octyle, nonyle, décyle, undécyle ou dodécyle ; un radical alkoxy comportant de 1 à 12 atomes de carbone ; un radical phényle éventuellement substitué par 1 à 3 radicaux alkyle ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyle ayant de 1 à 3 atomes de carbone, étant entendu que :

- d'une part, lorsque les polymères selon la présente invention sont préparés avec un (ou des) composé(s) (e) précédemment défini(s), le rapport

$$\frac{\text{nombre de moles de (a)}}{\text{nombre de moles de groupements } NH_2}$$

précédemment défini, est respecté mais 50 % au moins des groupements $NH_2$ proviennent du composé (b),
- d'autre part, lorsque le composé (3i) est utilisé, il ne représente que 2 à 30 % et de préférence 4 à 15 %, en poids, du mélange bis-imide(s) (a) + paraallylaniline (b).

**4.** Polymère selon l'une quelconque des revendications 1 à 3, caractérisé en ce qu'il est obtenu en ajoutant aux composés (a) + (b) + éventuellement (c) + éventuellement (d) + éventuellement (e) : un composé (f) ou un mélange de composés (f) choisi(s) parmi :

* (f1) une résine époxy chlorée ou bromée, qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau(x) aromatique(s) issu d'un polyphénol choisi dans le groupe formé par: la famille des bis(hydroxyphényl)-alkanes; le résorcinol; l'hydroquinone; le pyrocatéchol; le dihydroxy-4,4'diphényle; et les produits de condensation des phénols précités avec un aldehyde;

* (f2) un N,N'-alkylène-bis-tétrahalogénophtalimide de formule :

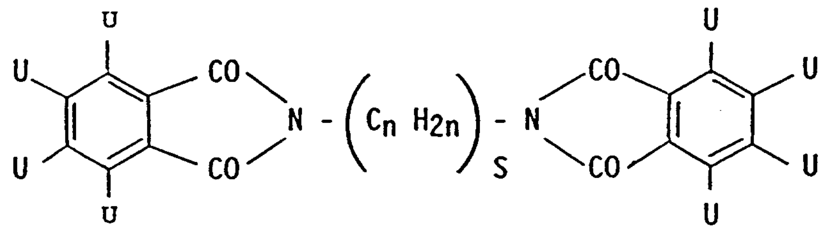

(VI)

dans laquelle :

. les symboles U, identiques ou différents, représentent chacun un atome de chlore ou de brome ;

. le radical alkylène $-C_n H_{2n}-$ peut être linéaire ou ramifié ;

. n est un nombre entier égal à 1, 2, 3 ou 4 ;

. S est 0 ou 1.

* (f3) un produit halogéné de formule :

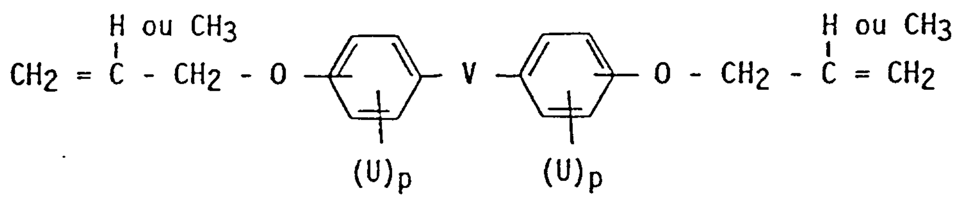

(VII)

dans laquelle :

. les symboles U ont la signification donnée ci-avant ;

. le symbole V représente un lien valentiel simple, un radical alkylène $-C_n H_{2n}-$, linéaire ou ramifié, avec n étant égal à 1, 2, 3 ou 4 ou un atome d'oxygène ;

. p est un nombre entier égal à 2, 3 ou 4 ;

* (f4) une résine époxy non halogénée, qui possède un poids d'équivalent époxy compris entre 100 et 1000 et qui consiste dans un ether glycidique obtenu en faisant réagir avec de l'epichlorhydrine un polyphénol non chloré ou non bromé sur le (ou les) noyau(x) aromatique(s) choisi dans le groupe des phénols dont on a parlé ci-avant à propos de la définition de la résine (f1);

* (f5) un alkénylphénol de formule :

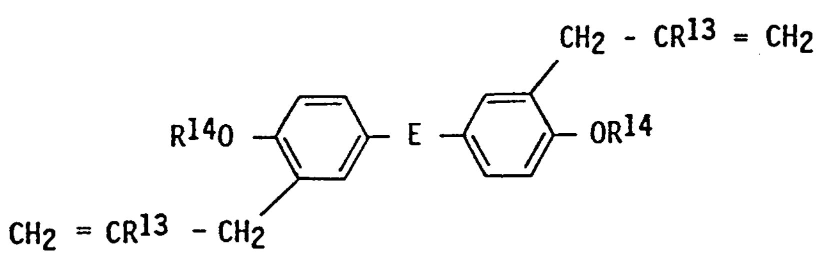

(VIII)

dans laquelle :

. le symbole E représente un lien valentiel simple ou radical divalent choisi dans le groupe formé par les radicaux ;

$- CH_2 -$ ; $- CH_2 - CH_2 -$ ;

$$\begin{array}{c} CH_3 \\ | \\ -\ C\ -\ ; \\ | \\ CH_3 \end{array}$$

- O - ; - S - ; - SO - ; et - $SO_2$-;

. les symboles $R^{13}$, identiques ou différents, représentent chacun un atome d'hydrogène ou un radical méthyle ;

. les symboles $R^{14}$, identiques ou différents, représentent chacun un atome d'hydrogène ou un radical alkyle linéaire ou ramifié ayant de 1 à 6 atomes de carbone ou un radical phényle ;

(f6) un acrylate de formule générale :

$$(CH_2 = CR^{15} - CO - O)_n\!-\!\!-\!\!-\!\!-\ B \qquad (IX)$$

dans laquelle :

. le symbole $R^{15}$ représente un atome d'hydrogène ou un radical méthyle ;

. n représente un nombre entier ou fractionnaire au moins égal à 1 et au plus égal à 8 ;

. le symbole B représente un radical organique de valence n dérivé : d'un reste aliphatique saturé, linéaire ou ramifié, ayant de 1 à 30 atomes de carbone et pouvant renfermer un ou plusieurs pont(s) oxygène et/ou une ou plusieurs fonction(s) hydroxyle(s) libre(s) ; d'un reste aromatique (de type arylique ou arylaliphatique) ayant de 6 à 150 atomes de carbone constitué par un noyau benzénique, pouvant être substitué par un à trois radicaux alkyles ayant de 1 à 5 atomes de carbone, ou par plusieurs noyaux benzéniques, éventuellement substitués comme indiqué ci-avant, reliés entre eux par un lien valentiel simple, un groupement inerte ou un radical alkylène ayant de 1 à 3 atomes de carbone, ledit reste aromatique pouvant renfermer à divers endroits de sa stucture un ou plusieurs pont(s) oxygène et/ou une ou plusieurs fonction(s) hydroxyle(s) libre(s), le (ou les) valence(s) libre(s) du radical B aromatique pouvant être portée(s) par un atome de carbone d'une chaîne aliphatique et/ou par un atome de carbone d'un noyau benzénique,

et caractérisé en outre en ce lorsqu'un composé (f) (ou un mélange de composés f) est utilisé pour la réalisation des polymères selon la présente invention, il représente en poids 2 à 35 %, de préférence 5 à 30 %, du mélange (a) + (b) + éventuellement (c) + éventuellement (d) + éventuellement (e).

**5.** Polymère selon l'une quelconque des revendications 1 à 4, caractérisé en ce qu'il est obtenu en ajoutant aux composés (a) et (b) + éventuellement (c) + éventuellement (d) + éventuellement (e) + éventuellement (f) :
un composé (g) consistant en un NN'-bis-maléimide renfermant dans sa structure un groupement diorganosiloxane, la quantité de composé (g) engagée étant compris entre 1 et 40 %, de préférence entre 5 et 30 %, du poids total des composés (a) + (b) + éventuellement (c) + éventuellement (d) + éventuellement (e) + éventuellement (f).

**6.** Polymère selon la revendication 5, caractérisé en ce que le NN'-bis-maléimide à groupement diorganopolysiloxane (g) a la formule suivante :

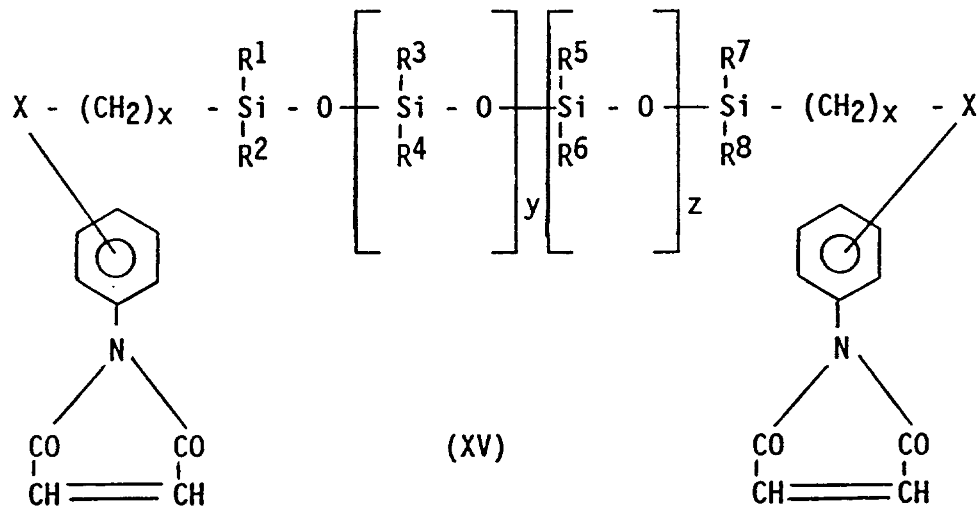

(XV)

dans laquelle :

- X, qui est est position ortho, méta ou para par rapport à l'atome de carbone du cycle benzénique relié à l'azote, représente un lien valentiel simple ou un atome ou un groupement suivant : - O - ; - S - ;

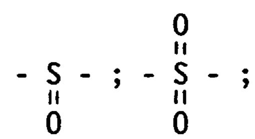

- $R^1$, $R^2$, $R^3$, $R^4$, $R^5$, $R^6$, $R^7$, $R^8$, identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement -CN ; un radical phényle éventuellement substitué par un ou plusieurs radicaux alkyles et/ou alkoxy ayant de 1 à 4 atomes de carbone ou par un ou plusieurs atomes de chlore ;
- le symbole x est un nombre entier situé dans l'intervalle allant de 2 à 8 ;
- les symboles y et z représentent des nombres, identiques ou différents, entiers ou fractionnaires, dont la somme se situe dans l'intervalle allant de 0 à 100.

**7.** Polymères selon l'une quelconque des revendications précédentes, caractérisés en ce qu'ils se trouvent sous forme de polymères durcis, insolubles dans les solvants usuels et ne présentant pas de ramollissement notable au-dessous de la température à laquelle ils commencent à se dégrader.

**8.** Polymères selon l'une quelconque des revendications 1 à 6, caractérisés en ce qu'ils se trouvent sous forme de prépolymères thermodurcissables solubles dans les solvants organiques polaires et présentant un point de ramolissement à une température inférieure à 200 °C.

**9.** Polymères selon la revendication 8, sous forme de prépolymère, obtenus par chauffage, entre 50 et 180 °C, du mélange des composés (a) et (b) + éventuellement (d) + éventuellement (e) + éventuellement (f) + éventuellement (g).

**10.** Procédé de préparation des polymères selon l'une quelconque des revendications 1 à 7, caractérisé en ce que l'on mélange les composés (a) et (b) + éventuellement (c) + éventuellement (d) + éventuellement (e) + éventuellement (f) + éventuellement (g) et en ce que l'on chauffe entre 50 et 180 °C, en ce qu'on isole et broie le prépolymère ainsi obtenu, et en ce que l'on cuit ce prépolymère entre 180 et 300 °C.

**11.** Utilisation des polymères selon les revendications 8 ou 9, pour la réalisation d'objets moulés, de revêtements, d'articles à structure cellulaire et de matériaux composites renforcés et imprégnés.

**Revendications pour l'Etat contractant suivant : ES**

**1.** Procédé de préparation de polymères à groupements imides se trouvant sous forme de polymères durcis, insolubles dans les solvants usuels et ne présentant pas de ramollissement notable au-dessous de la temperature à laquelle ils commencent à se dégrader, qui consiste à chauffer le mélange des ingrédient siuvants:

(a) un N,N'-bis-imide ou une association de plusieurs bis-imides de formule :

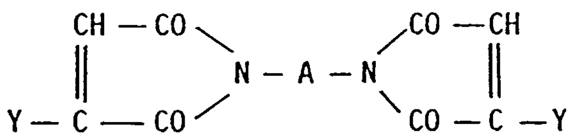

(I)

dans laquelle :

. le symbole Y représente H, $CH_3$ ou Cl

. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; méthyl-6 phénylène-1,3 ; diéthyl-2,5 méthyl-3 phénylène-1,4 ; et les radicaux de formule :

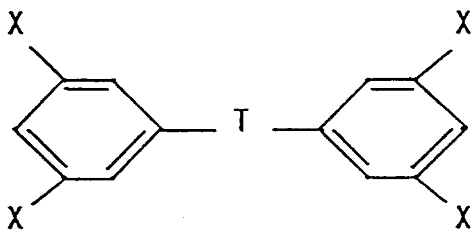

dans laquelle T représente un lien valentiel simple ou un groupement :

- $CH_2$- ;

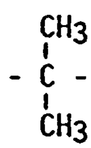 ;

- O - ;

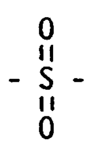 ; 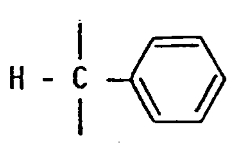 ; 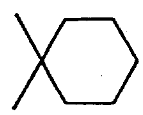 ;

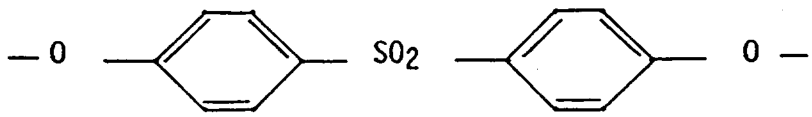

et X représente un atome d'hydrogène, un radical méthyle, éthyle ou isopropyle ;
(b) une ou plusieurs p-allylaniline(s) de formule :

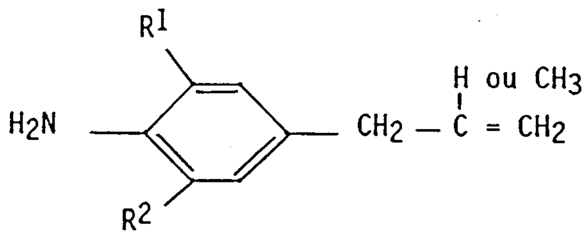

(II)

dans laquelle les groupements $R^1$ et $R^2$, identiques ou différents, représentent des groupements alkyles en C1 à C4, comme par exemple les groupements méthyle, éthyle, propyle, isopropyle, butyle.
(c) éventuellement en présence d'un composé (c) choisi parmi :

- les péroxydes organiques,
- l'azobisisobutyronitrile,
- un dérivé de l'imidazole de formule générale

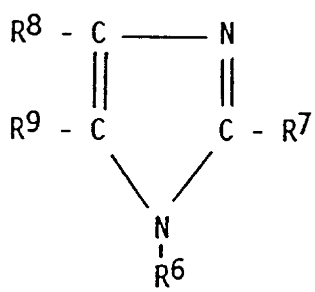

dans laquelle $R^6$, $R^7$, $R^8$ et $R^9$, identiques ou différents, représentent chacun : un atome d'hydrogène, un radical alkyle ou alcoxy ayant de 1 à 20 atomes de carbone, vinyle, phényle, nitro, $R^8$ pouvent former avec $R^9$ et les atomes de carbone auxquels sont liés ces radicaux un cycle unique comme par exemple un cycle benzénique, $R^6$ pouvant également représenter un groupement carbonyle lié à un deuxième cycle imidazole.

(d) éventuellement en présence d'un composé (d) choisi parmi les vinylpyridines, la N-vinylpyrrolidone, l'isocyanurate d'allyle, le vinyltétrahydrofuranne et leurs mélanges;
les quantités de N,N'-bis-imide (a) et de p-allylaniline (b) étant choisies de façon à ce que le raport:

$$\frac{\text{nombre de moles de (a)}}{\text{nombre de moles de groupements } NH_2}$$

soit compris entre 20 et 0,1;
le composé (c), lorsqu'il est utilisé, représentant de 0,01 à 6 % du poids de la somme des composés (a) + (b); et
le composé (d), lorsqu'il est utilisé, représentant moins de 50 %, en poids, de la somme des composés (a) + (b).

**2.** Procédé selon la revendication 1, caractérisés en ce que les quantités de NN'-bis-imide (a) et de p-allylaniline (b), sont choisies de façon à ce que le rapport :

$$\frac{\text{nombre de moles de (a)}}{\text{nombre de moles de groupements } NH_2}$$

soit compris entre 5 et 0,5,

- en ce que le composé (c), lorsqu'il est utilisé, représente, de 0,1 à 3 %, du poids, de la somme des composés (a) + (b),
- et en ce que le composé (d), lorsqu'il est utilisé, représente de 1 à 25 %, en poids, de la somme des composés (a) + (b).

**3.** Procédé selon l'une quelconque des revendications 1 ou 2, caractérisé en ce que le mélange des ingrédients est obtenu en ajoutant aux composés (a) et (b) avec éventuellement (c) et éventuellement (d) :
un composé (e) consistant en une ou plusieurs diamines biprimaires choisies parmi :
i) les espèces répondant à la formule générale :

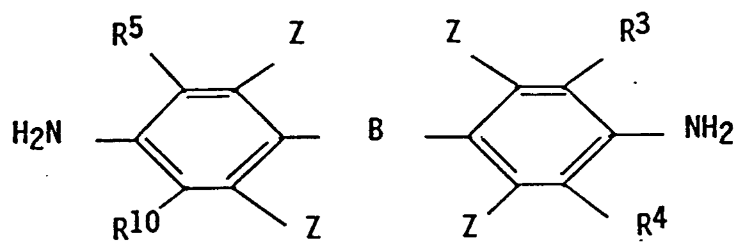

(IV)

dans laquelle :

. les symboles $R^5$, $R^{10}$, $R^3$ et $R^4$, identiques ou différents, représentent chacun un radical méthyle, éthyle, propyle ou isopropyle ;
. les symboles Z, identiques ou différents, représentent chacun un atome d'hydogène ou un atome de chlore ;
. le symbole B représente un radical divalent choisi dans le groupe formé par les radicaux : -$CH_2$- ,

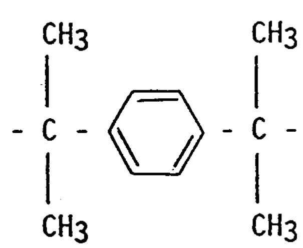 et 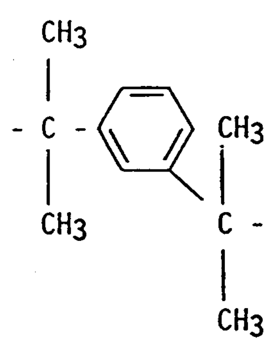

(2i) et les espèces répondant à la formule générale :

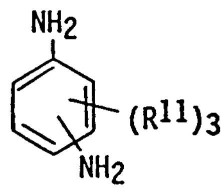

(III)

dans laquelle :

. les radicaux amino sont en position méta ou para, l'un par rapport à l'autre ;

. les symboles $R^{11}$, identiques ou différents, représentent chacun un radical méthyle, éthyle, propyle ou isopropyle,

(3i) les espèces consistant dans une ou plusieurs guanamine(s) substituée(s) de formule :

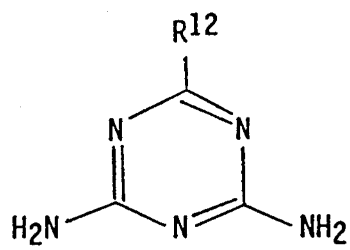

(V)

dans laquelle le symbole $R^{12}$ représente : un radical alkyle, linéaire ou ramifié, comportant de 1 à 12 atomes de carbone, comme par exemple un radical méthyle, éthyle, propyle, butyle, pentyle, hexyle, heptyle, octyle, nonyle, décyle, undécyle ou dodécyle ; un radical alkoxy comportant de 1 à 12 atomes de carbone ; un radical phényle éventuellement substitué par 1 à 3 radicaux alkyle ayant de 1 à 3 atomes de carbone ; un radical phénylalkyle comportant de 1 à 3 atomes de carbone dans le reste alkyle et dont le noyau benzénique peut éventuellement être substitué par 1 à 3 radicaux alkyle ayant de 1 à 3 atomes de carbone,

étant entendu que :

- d'une part, lorsque les polymères selon la présente invention sont préparés avec un (ou des) composé(s) (e) précédemment défini(s), le rapport

$$\frac{\text{nombre de moles de (a)}}{\text{nombre de moles de groupements } NH_2}$$

  précédemment défini, est respecté mais 50 % au moins des groupements $NH_2$ proviennent du composé (b),
- d'autre part, lorsque le composé (3i) est utilisé, il ne représente que 2 à 30 % et de préférence 4 à 15 %, en poids, du mélange bis-imide(s) (a) + paraallylaniline (b).

**4.** Procédé selon l'une quelconque des revendications 1 à 3, caractérisé en ce que le mélange des ingrédients est obtenu en ajoutant aux composés (a) et (b) + éventuellement (c) + éventuellement (d) + éventuellement (e) : un composé (f) ou un mélange de composés (f) choisi(s) parmi :

* (f1) une résine époxy chlorée ou bromée, qui possède un poids d'équivalent époxy compris entre 200 et 2000 et qui consiste dans un éther glycidique obtenu en faisant réagir avec de l'épichlorhydrine un dérivé chloré ou bromé sur le (ou les) noyau (x) aromatique (s) issu d'un polyphénol choisi dans le groupe formé par: la famille des bis(hydroxyphényl)-alkanes; le résorcinol; l'hydroquinone; le pyrocatéchol; le dihydroxy-4,4'diphényle; et les produits de condensation des phénols précités avec un aldehyde;

* (f2) un N,N'-alkylène-bis-tétrahalogénophtalimide de formule :

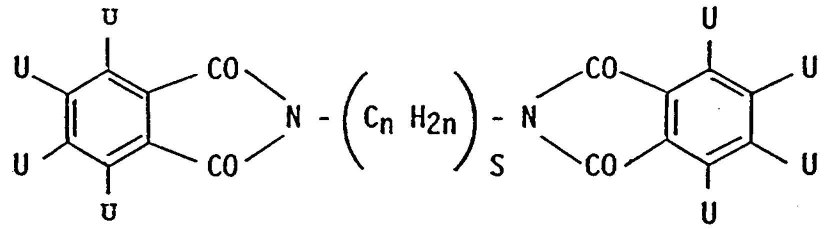

(VI)

dans laquelle :

. les symboles U, identiques ou différents, représentent chacun un atome de chlore ou de brome ;
. le radical alkylène $-C_n H_{2n}-$ peut être linéaire ou ramifié ;
. n est un nombre entier égal à 1, 2, 3 ou 4 ;
. S est 0 ou 1.

* (f3) un produit halogéné de formule :

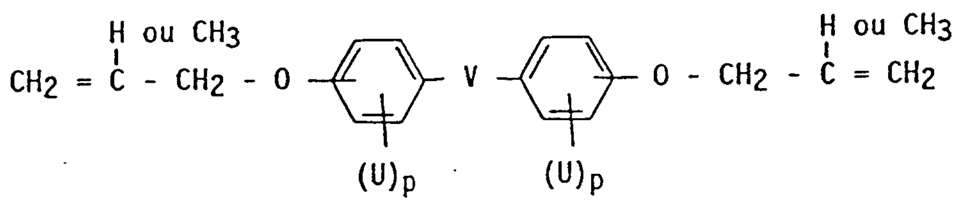

(VII)

dans laquelle :

. les symboles U ont la signification donnée ci-avant ;
. le symbole V représente un lien valentiel simple, un radical alkylène $-C_n H_{2n}-$, linéaire ou ramifié, avec n étant égal à 1, 2, 3 ou 4 ou un atome d'oxygène ;
. p est un nombre entier égal à 2, 3 ou 4 ;

* (f4) une résine époxy non halogénée, qui possède un poids d'équivalent époxy compris entre 100 et 1000 et qui consiste dans un ether glycidique obtenu en faisant réagir avec de l'epichlorhydrine un polyphénol non chloré ou non bromé sur le (ou les) noyau(x) aromatique(s) choisi dans le groupe des phénols dont on a parlé ci-avant à propos de la définition de la résine (f1);
* (f5) un alkénylphénol de formule :

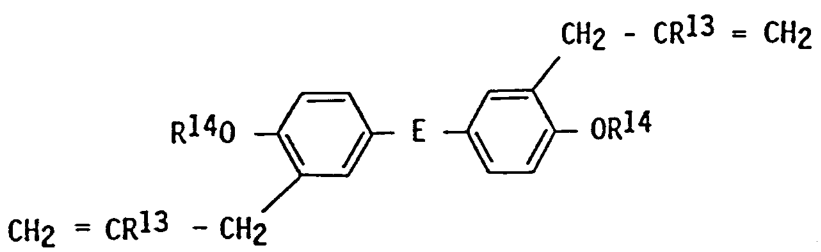

(VIII)

dans laquelle :

. le symbole E représente un lien valentiel simple ou radical divalent choisi dans le groupe formé par les radicaux ;
$- CH_2 -$ ; $- CH_2 - CH_2 -$ ;

$$\begin{array}{c} CH_3 \\ | \\ -\ C\ - \\ | \\ CH_3 \end{array} ;$$

- O - ; - S - ; - SO - ; et - $SO_2$-;

. les symboles $R^{13}$, identiques ou différents, représentent chacun un atome d'hydrogène ou un radical méthyle ;

. les symboles $R^{14}$, identiques ou différents, représentent chacun un atome d'hydrogène ou un radical alkyle linéaire ou ramifié ayant de 1 à 6 atomes de carbone ou un radical phényle ;

(f6) un acrylate de formule générale :

$$(CH_2 = CR^{15} - CO - O \overline{)_n \quad} B \qquad (IX)$$

dans laquelle :

. le symbole $R^{15}$ représente un atome d'hydrogène ou un radical méthyle ;

. n représente un nombre entier ou fractionnaire au moins égal à 1 et au plus égal à 8 ;

. le symbole B représente un radical organique de valence n dérivé : d'un reste aliphatique saturé, linéaire ou ramifié, ayant de 1 à 30 atomes de carbone et pouvant renfermer un ou plusieurs pont(s) oxygène et/ou une ou plusieurs fonction(s) hydroxyle(s) libre(s) ; d'un reste aromatique (de type arylique ou arylaliphatique) ayant de 6 à 150 atomes de carbone constitué par un noyau benzénique, pouvant être substitué par un à trois radicaux alkyles ayant de 1 à 5 atomes de carbone, ou par plusieurs noyaux benzéniques, éventuellement substitués comme indiqué ci-avant, reliés entre eux par un lien valentiel simple, un groupement inerte ou un radical alkylène ayant de 1 à 3 atomes de carbone, ledit reste aromatique pouvant renfermer à divers endroits de sa stucture un ou plusieurs pont(s) oxygène et/ou une ou plusieurs fonction(s) hydroxyle(s) libre(s), le (ou les) valence(s) libre(s) du radical B aromatique pouvant être portée(s) par un atome de carbone d'une chaîne aliphatique et/ou par un atome de carbone d'un noyau benzénique,

et caractérisé en outre en ce lorsqu'un composé (f) (ou un mélange de composés f) est utilisé pour la réalisation des polymères selon la présente invention, il représente en poids 2 à 35 %, de préférence 5 à 30 %, du mélange (a) + (b) + éventuellement (c) + éventuellement (d) + éventuellement (e).

**5.** Procédé selon l'une quelconque des revendications 1 à 4, caractérisé en ce que le mélange des ingrédients est obtenu en ajoutant aux composés (a) et (b) + éventuellement (c) + éventuellement (d) + éventuellement (e) + éventuellement (f):
un composé (g) consistant en un NN'-bis-maléimide renfermant dans sa structure un groupement diorganosiloxane, la quantité de composé (g) engagée étant compris entre 1 et 40 %, de préférence entre 5 et 30 %, du poids total des composés (a) + (b) + éventuellement (c) + éventuellement (d) + éventuellement (e) + éventuellement (f).

**6.** Procédé selon la revendication 5, caractérisé en ce que le NN'-bis-maléimide à groupement diorganopolysiloxane (g) a la formule suivante :

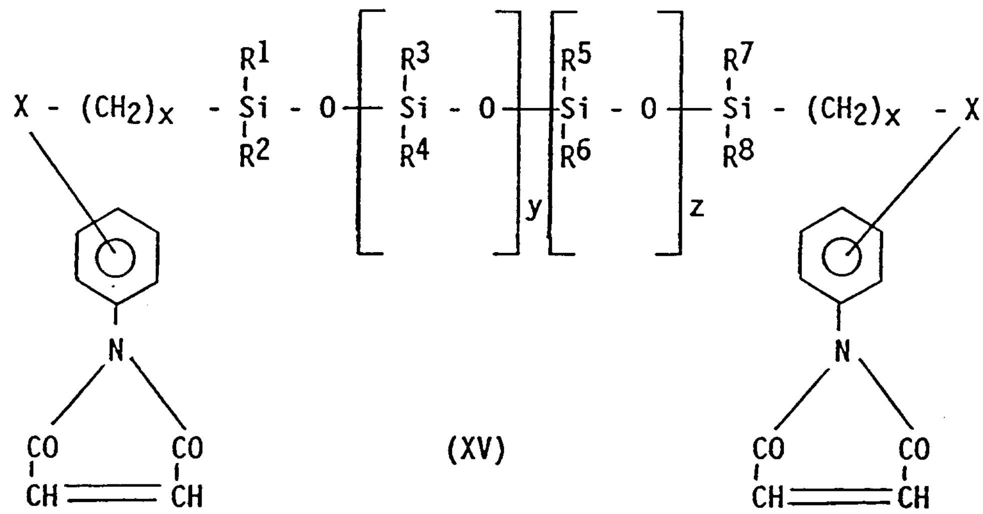

(XV)

dans laquelle :

- X, qui est est position ortho, méta ou para par rapport à l'atome de carbone du cycle benzénique relié à l'azote, représente un lien valentiel simple ou un atome ou un groupement suivant : - O - ; - S - ;

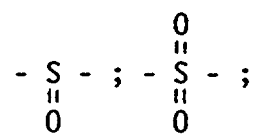

- $R^1$, $R^2$, $R^3$, $R^4$, $R^5$, $R^6$, $R^7$, $R^8$, identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement -CN ; un radical phényle éventuellement substitué par un ou plusieurs radicaux alkyles et/ou alkoxy ayant de 1 à 4 atomes de carbone ou par un ou plusieurs atomes de chlore ;
- le symbole x est un nombre entier situé dans l'intervalle allant de 2 à 8 ;
- les symboles y et z représentent des nombres, identiques ou différents, entiers ou fractionnaires, dont la somme se situe dans l'intervalle allant de 0 à 100.

**7.** Procédé de préparation de polymères à groupements imides se trouvant sous forme de prépolymères thermodurcissables solubles dans les solvants organiques polaires et présentant un point de ramolissement à une température inférieure à 200 ° C, qui consiste à chauffer, entre 50 et 180 ° C, le mélange des composés (a) et (b) + éventuellement (c) + éventuellement (d) + éventuellement (e) + éventuellement (f) + éventuellement (g).

**8.** Procédé selon l'une quelconque des revendications 1 à 6, caractérisé en ce que l'on mélange les composés (a) et (b) + éventuellement (c) + éventuellement (d) + éventuellement (e) + éventuellement (f) + éventuellement (g) et en ce que l'on chauffe entre 50 et 180 ° C, en ce qu'on isole et broie le prépolymère ainsi obtenu, et en ce que l'on cuit ce prépolymère entre 180 et 300 ° C.

**9.** Utilisation des polymères préparés selon la revendication 7 pour la réalisation d'objets moulés, de revêtements, d'articles à structure cellulaire et de matériaux composites renforcés et imprégnés.

## Claims

**Claims for the following Contracting States : AT, BE, CH, DE, DK, FR, GB, GR, IT, LI, LU, NL, SE**

**1.** Polymers containing imide groups, characterized in that they comprise the product of the reaction between:

(a) an N,N'-bisimide or a combination of a number of bisimides of formula:

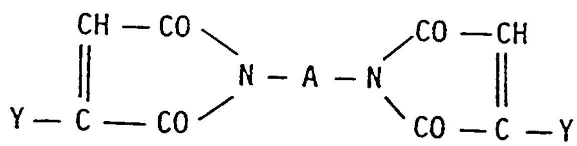

(I)

in which:

- the symbol Y denotes H, $CH_3$ or Cl
- the symbol A denotes a divalent radical chosen from the group consisting of the following radicals: cyclohexylene, phenylene, 4-methyl-1,3-phenylene, 2-methyl-1,3-phenylene, 5-methyl-1,3-phenylene, 6-methyl-1,3-phenylene, 2,5-diethyl-3-methyl-1,4-phenylene, and the radicals of formula:

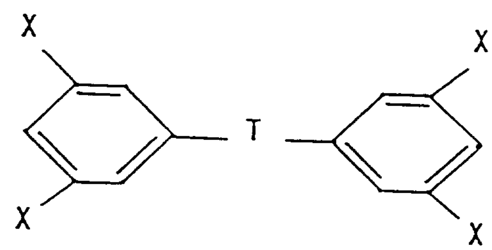

in which T denotes a single valency bond or a group:

- $CH_2$- ,

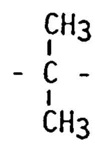

,

- O - ,

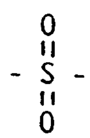

, 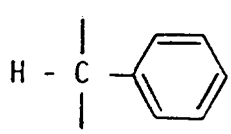

, 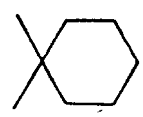

,

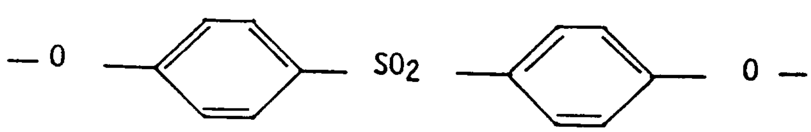

and X denotes a hydrogen atom, a methyl, ethyl or isopropyl radical, and

(b) one or more p-allylaniline(s) of formula:

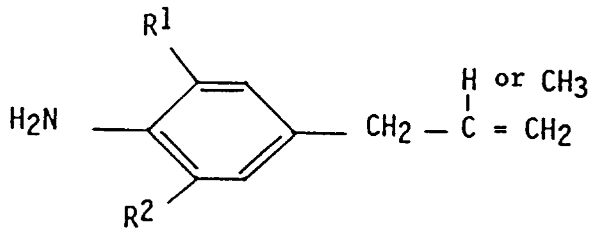

(II)

in which the groups $R^1$ and $R^2$, which are identical or different, denote $C_1$-$C_4$ alkyl groups such as, for example, methyl, ethyl, propyl, isopropyl and butyl groups,

(c) optionally in the presence of a compound (c) chosen from:

- organic peroxides,
- azobisisobutyronitrile,
- an imidazole derivative of general formula

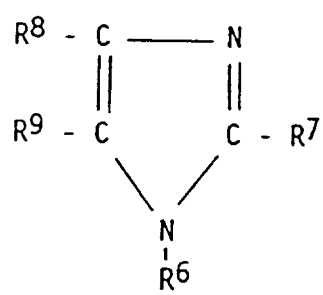

in which each of $R^6$, $R^7$, $R^8$ and $R^9$, which are identical or different, denotes: a hydrogen atom, an alkyl or alkoxy radical containing from 1 to 20 carbon atoms, or a vinyl, phenyl or nitro radical, it being possible for $R^8$ to form with $R^9$ and the carbon atoms to which these radicals are bonded a single ring such as, for example, a benzene ring, it being also possible for $R^6$ to denote a carbonyl group bonded to a second imidazole ring,

(d) optionally in the presence of a compound (d) chosen from vinylpyridines, N-vinylpyrrolidone, allyl isocyanurate, vinyltetrahydrofuran and mixtures thereof;

the quantities of N,N'-bisimide (a) and of p-allylaniline (b) being chosen so as to make the ratio:

number of moles of (a) /

number of moles of $NH_2$ groups

between 20 and 0.1; the compound (c), when it is employed, representing from 0.01 to 6 % of the weight of the total of the compounds (a) + (b) ; and the compound (d), when it is employed, representing less than 50 % by weight of the total of the compounds (a) + (b).

**2.** Polymers according to Claim 1, characterized in that the quantities of N,N'-bisimide (a) and of p-allylaniline (b) are chosen so as to make the ratio:

number of moles of (a) /

number of moles of $NH_2$ groups

between 5 and 0.5,

- in that the compound (c), when it is employed, represents from 0.1 to 3 % of the weight of the total of the compounds (a) + (b),
- and in that the compound (d), when it is employed, represents from 1 to 25 % by weight of the total of the compounds (a) + (b).

**3.** Polymer according to either of Claims 1 and 2, characterized in that it is obtained by adding to the compounds (a) and (b) with optionally (c) and optionally (d): a compound (e) consisting of one or more diprimary diamines chosen from:

(i) the species corresponding to the general formula:

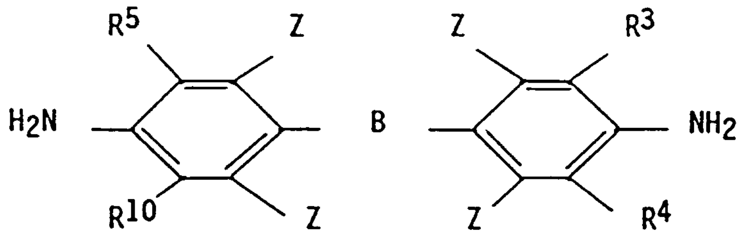

(IV)

in which:

- each of the symbols $R^5$, $R^{10}$, $R^3$ and $R^4$, which are identical or different, denotes a methyl, ethyl, propyl or isopropyl radical,
- each of the symbols Z, which are identical or different, denotes a hydrogen atom or a chlorine atom,
- the symbol B denotes a divalent radical chosen from the group made up of the radicals: $-CH_2-$,

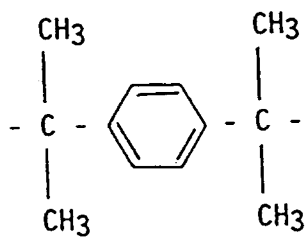

and

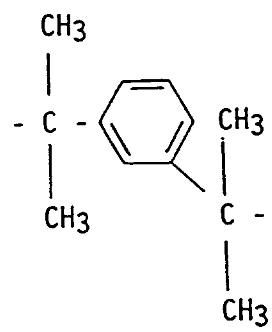

(ii) and the species corresponding to the general formula:

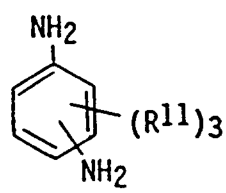

(III)

in which:

- the amino radicals are in a meta or para position relative to each other,
- each of the symbols $R^{11}$, which are identical or different, denotes a methyl, ethyl, propyl or isopropyl radical,

(iii) the species consisting of one or more substituted guanamine(s) of formula:

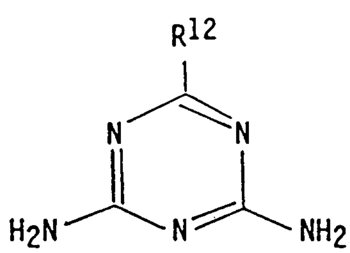

(V)

in which the symbol $R^{12}$ denotes: a linear or branched alkyl radical containing from 1 to 12 carbon atoms, such as, for example, a methyl, ethyl, propyl, butyl, pentyl, hexyl, heptyl, octyl, nonyl, decyl, undecyl or dodecyl radical, an alkoxy radical containing from 1 to 12 carbon atoms, a phenyl radical optionally substituted by 1 to 3 alkyl radicals containing from 1 to 3 carbon atoms, a phenylalkyl radical containing from 1 to 3 carbon atoms in the alkyl residue and in which the benzene ring may be optionally substituted by 1 to 3 alkyl radicals containing from 1 to 3 carbon atoms, provided that:

- on the one hand, when the polymers according to the present invention are prepared with one or more of the compounds (e) defined above, the ratio
  number of moles of (a) /
  number of moles of $NH_2$ groups
  as defined above is obeyed but at least 50 % of the $NH_2$ groups originate from the compound (b), and
- on the other hand, when the compound (iii) is employed, it represents only 2 to 30 % and preferably 4 to 15 % by weight of the mixture of bisimide(s) (a) + para-allylaniline (b).

**4.** Polymer according to any one of Claims 1 to 3, characterized in that it is obtained by adding to the compounds (a) + (b) + optionally (c) + optionally (d) + optionally (e):
a compound (f) or a mixture of compounds (f) chosen from:

- (f1) a chlorinated or brominated epoxy resin, which has an epoxy equivalent weight of between 200 and 2000 and which consists of a glycidyl ether obtained by reacting epichlorohydrin with a derivative which is chlorinated or brominated on the aromatic nucleus (or nuclei) and originates from a polyphenol chosen from the group made up of the class of bis(hydroxyphenyl)alkanes; resorcinol; hydroquinone; pyrocatechol; 4,4'-dihydroxydiphenyl; and products of condensation of the abovementioned phenols with an aldehyde;
- (f2) an N,N'-alkylenebistetrahalophthalimide of formula:

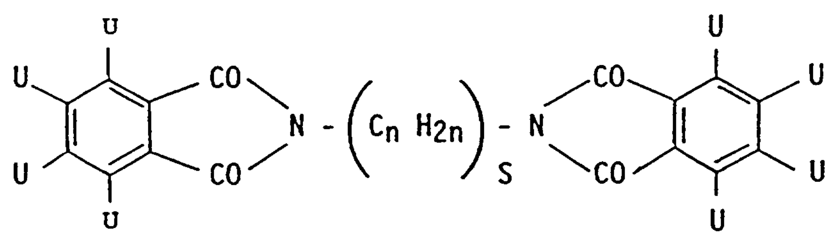

(VI)

in which:

- each of the symbols U, which are identical or different, denotes a chlorine or bromine atom,
- the alkylene radical $C_nH_{2n}$- may be linear or branched,
- n is an integer equal to 1, 2, 3 or 4, and
- S is 0 or 1,

- (f3) a halogenated product of formula:

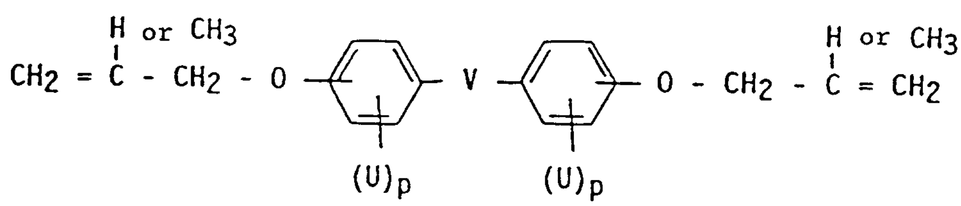

(VII)

in which:

- the symbols U have the meaning given above,
- the symbol V denotes a single valency bond, a linear or branched alkylene radical $-C_nH_{2n}-$ with n being equal to 1, 2, 3 or 4, or an oxygen atom,
- p is an integer equal to 2, 3 or 3,

- (f4) an unhalogenated epoxy resin, which has an epoxy equivalent weight of between 100 and 1000 and which consists of a glycidyl ether obtained by reacting epichlorohydrin with a

polyphenol which is unchlorinated or unbrominated on the aromatic nucleus (nuclei), chosen from the group of the phenols discussed above in connection with the definition of the resin (f1);

- (f5) an alkenylphenol of formula:

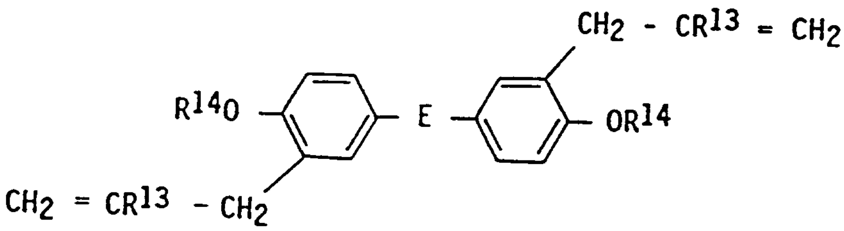

(VIII)

in which:

- the symbol E denotes a single valency bond or a divalent radical chosen from the group made up of the radicals:
  $- CH_2 -$ , $- CH_2 - CH_2 -$ ,

  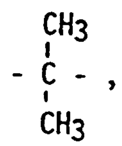

  - O - , - S - , - SO - ; and $- SO_2 -$,
- each of the symbols $R^{13}$, which are identical or different, denotes a hydrogen atom or a methyl radical,
- each of the symbols $R^{14}$, which are identical or different, denotes a hydrogen atom or a linear or branched alkyl radical containing from 1 to 6 carbon atoms, or a phenyl radical,

(f6) an acrylate of general formula:

$$(CH_2 = CR^{15} - CO - O)_n - B \qquad (IX)$$

in which:

- the symbol $R^{15}$ denotes a hydrogen atom or a methyl radical,
- n denotes a whole or fractional number equal to at least 1 and not exceeding 8,
- the symbol B denotes an organic radical of valency n, derived from a linear or branched saturated aliphatic residue containing from 1 to 30 carbon atoms and capable of containing one or more oxygen bridges and/or one or more free hydroxyl functional groups, or from an aromatic residue (of aryl or arylaliphatic type) containing from 6 to 150 carbon atoms, consisting of a benzene nucleus which may be substituted by one to three alkyl radicals containing from 1 to 5 carbon atoms, or of a number of benzene rings optionally substituted as shown above and joined together by a single valency bond, an inert group or an alkylene radical containing from 1 to 3 carbon atoms, it being possible for the said aromatic residue to contain in various places of its structure one or more oxygen bridges and/or one or more free hydroxyl functional groups, it being possible for the free valencies of the aromatic radical B to be carried by a carbon atom of an aliphatic chain and/or by a carbon atom of a benzene nucleus,

  and additionally characterized in that when a compound (f) (or a mixture of compounds f) is employed for producing the polymers according to the present invention, it represents 2 to 35 %, preferably 5 to 30 %, by weight of the mixture of (a) + (b) + optionally (c) + optionally (d) + optionally (e).

**5.** Polymer according to any one of Claims 1 to 4, characterized in that it is obtained by adding to the compounds (a) and (b) + optionally (c) + optionally (d) + optionally (e) + optionally (f): a compound (g) consisting of an N,N'-bismaleimide containing a diorganosiloxane group in its structure, the quantity of compound (g) introduced being between 1 and 40 %, preferably between 5 and 30 %, of the total weight of the compounds (a) + (b) + optionally (c) + optionally (d) + optionally (e) + optionally (f).

**6.** Polymer according to Claim 5, characterized in that the N,N'-bismaleimide containing a diorganopolysiloxane group (g) has the following formula:

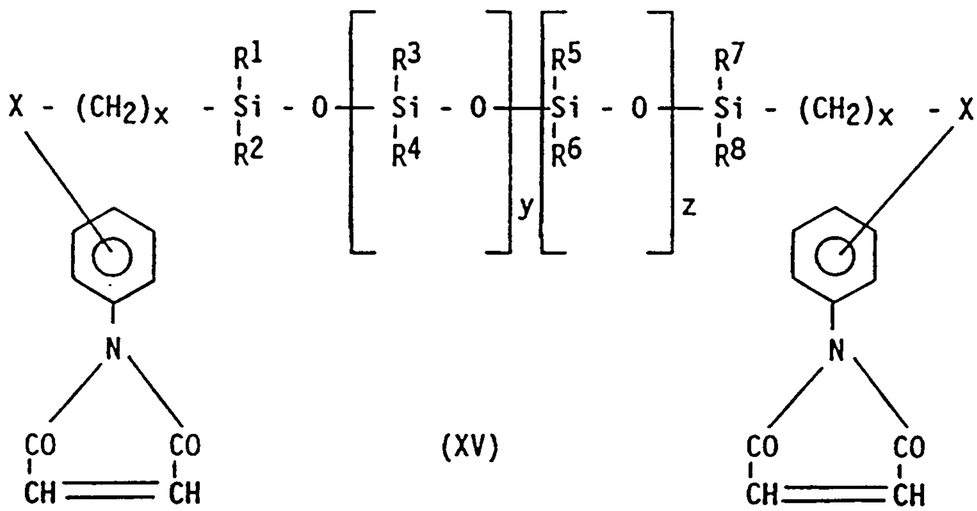

(XV)

in which:

- X, which is in an ortho, meta or para position in relation to the carbon atom of the benzene ring which is linked to nitrogen, denotes a single valency bond or an atom or group as follows: - O - ; - S - ,

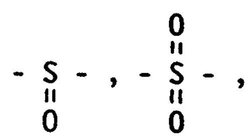

- each of $R^1$, $R^2$, $R^3$, $R^4$, $R^5$, $R^6$, $R^7$ and $R^8$, which are identical or different, denotes a monovalent hydrocarbon radical chosen from linear or branched alkyl radicals containing from 1 to 12 carbon atoms, it being possible for these radicals to be substituted by one or more chlorine, bromine or fluorine atoms or by a -CN group, or from a phenyl radical optionally substituted by one or more alkyl and/or alkoxy radicals containing from 1 to 4 carbon atoms or by one or more chlorine atoms,
- the symbol X is an integer lying in the range from 2 to 8, and
- the symbols y and z denote identical or different, whole or fractional numbers whose sum lies in the range from 0 to 100.

**7.** Polymers according to any one of the preceding claims, characterized in that they are in the form of cured polymers which are insoluble in the usual solvents and do not exhibit any appreciable softening below the temperature at which they begin to degrade.

**8.** Polymers according to any one of Claims 1 to 6, characterized in that they are in the form of heat-curable prepolymers which are soluble in polar organic solvents and exhibit a softening point at a temperature which is lower than 200 °C.

9. Polymers according to Claim 8, in prepolymer form, obtained by heating, between 50 and 180 °C, the mixture of the compounds (a) and (b) + optionally (d) + optionally (e) + optionally (f) + optionally (g).

10. Process for the preparation of the polymers according to any one of Claims 1 to 7, characterized in that the compounds (a) and (b) + optionally (c) + optionally (d) + optionally (e) + optionally (f) + optionally (g) are mixed and that heating between 50 and 180 °C is carried out, in that the prepolymer thus obtained is isolated and ground, and in that this prepolymer is cured between 180 and 300 °C.

11. Use of polymers according to Claim 8 or 9 for the production of moulded objects, coatings, articles with a cellular structure and of reinforced and impregnated composite materials.

**Claims for the following Contracting State : ES**

1. Process for the preparation of polymers containing imide groups, which are in the form of cured polymers which are insoluble in the usual solvents and do not exhibit any appreciable softening below the temperature at which they begin to degrade, which consists in heating the mixture of the following ingredients:

(a) an N,N'-bisimide or a combination of a number of bisimides of formula:

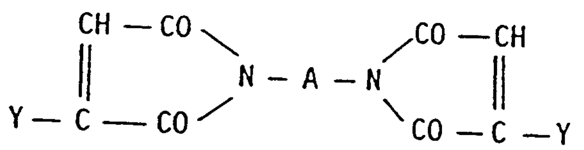

(I)

in which:

- the symbol Y denotes H, $CH_3$ or Cl
- the symbol A denotes a divalent radical chosen from the group consisting of the following radicals: cyclohexylene, phenylene, 4-methyl-1,3-phenylene, 2-methyl-1,3-phenylene, 5-methyl-1,3-phenylene, 6-methyl-1,3-phenylene, 2,5-diethyl-3-methyl-1,4-phenylene, and the radicals of formula:

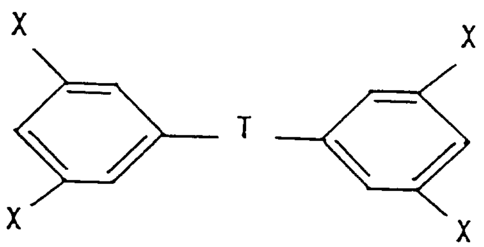

in which T denotes a single valency bond or a group:

- $CH_2$- ,

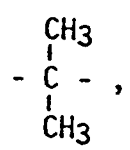

- O - ,

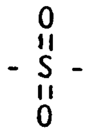 , 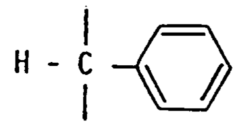 , 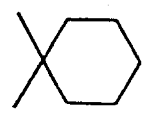 ,

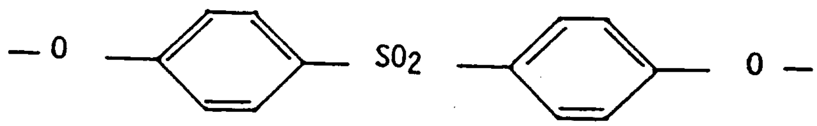

and X denotes a hydrogen atom, a methyl, ethyl or isopropyl radical, and

(b) one or more p-allylaniline(s) of formula:

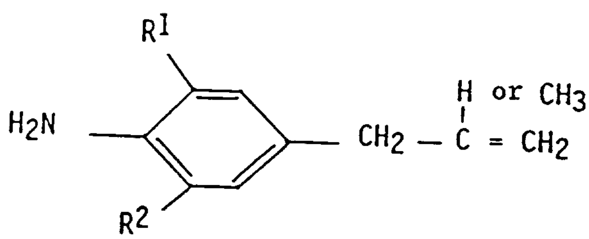

(II)

in which the groups $R^1$ and $R^2$, which are identical or different, denote $C_1$-$C_4$ alkyl groups such as, for example, methyl, ethyl, propyl, isopropyl and butyl groups,

(c) optionally in the presence of a compound (c) chosen from:

- organic peroxides,
- azobisisobutyronitrile,
- an imidazole derivative of general formula

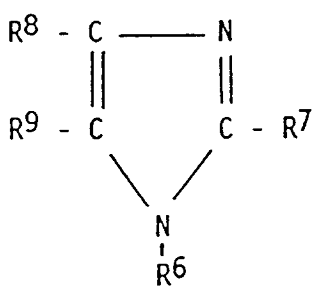

in which each of $R^6$, $R^7$, $R^8$ and $R^9$, which are identical or different, denotes: a hydrogen atom, an alkyl or alkoxy radical containing from 1 to 20 carbon atoms, or a vinyl, phenyl or nitro radical, it being possible for $R^8$ to form with $R^9$ and the carbon atoms to which these radicals are bonded a single ring such as, for example, a benzene ring, it being also possible for $R^6$ to denote a carbonyl group bonded to a second imidazole ring,

(d) optionally in the presence of a compound (d) chosen from vinylpyridines, N-vinylpyrrolidone, allyl isocyanurate, vinyltetrahydrofuran and mixtures thereof;

the quantities of N,N'-bisimide (a) and of p-allylaniline (b) being chosen so as to make the ratio:

number of moles of (a) /

number of moles of $NH_2$ groups

between 20 and 0.1; the compound (c), when it is employed, representing from 0.01 to 6 % of the weight of the total of the compounds (a) + (b); and the compound (d), when it is employed, representing less than 50 % by weight of the total of the compounds (a) + (b).

2. Process according to Claim 1, characterized in that the quantities of N,N'-bisimide (a) and of p-allylaniline (b) are chosen so as to make the ratio:
number of moles of (a) /
number of moles of $NH_2$ groups
between 5 and 0.5,
- in that the compound (c), when it is employed, represents from 0.1 to 3 % of the weight of the total of the compounds (a) + (b),
- and in that the compound (d), when it is employed, represents from 1 to 25 % by weight of the total of the compounds (a) + (b).

3. Process according to either of Claims 1 and 2, characterized in that the mixture of ingredients is obtained by adding to the compounds (a) and (b) with optionally (c) and optionally (d):
a compound (e) consisting of one or more diprimary diamines chosen from:
(i) the species corresponding to the general formula:

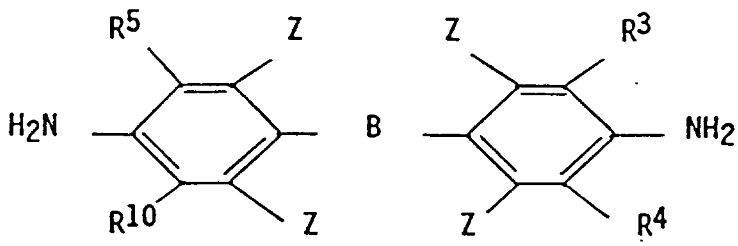

(IV)

in which:
- each of the symbols $R^5$, $R^{10}$, $R^3$ and $R^4$, which are identical or different, denotes a methyl, ethyl, propyl or isopropyl radical,
- each of the symbols Z, which are identical or different, denotes a hydrogen atom or a chlorine atom,
- the symbol B denotes a divalent radical chosen from the group made up of the radicals: $-CH_2-$,

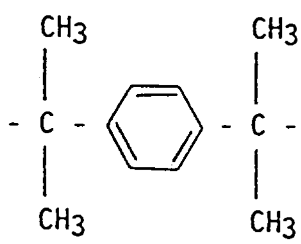

and

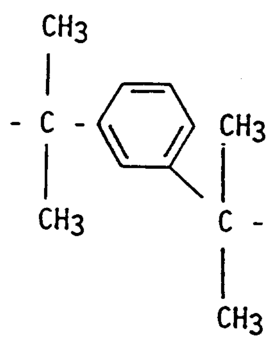

(ii) and the species corresponding to the general formula:

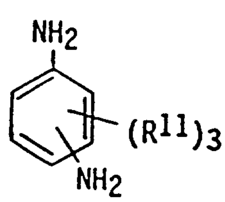

(III)

in which:
- the amino radicals are in a meta or para position relative to each other,
- each of the symbols $R^{11}$, which are identical or different, denotes a methyl, ethyl, propyl or isopropyl radical,

(iii) the species consisting of one or more substituted guanamine(s) of formula:

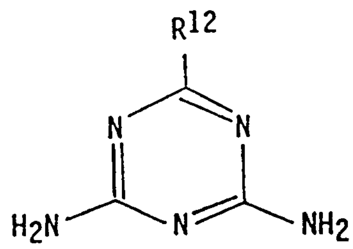

(V)

in which the symbol $R^{12}$ denotes: a linear or branched alkyl radical containing from 1 to 12 carbon atoms, such as, for example, a methyl, ethyl, propyl, butyl, pentyl, hexyl, heptyl, octyl, nonyl, decyl, undecyl or dodecyl radical, an alkoxy radical containing from 1 to 12 carbon atoms, a phenyl radical optionally substituted by 1 to 3 alkyl radicals containing from 1 to 3 carbon atoms, a phenylalkyl radical containing from 1 to 3 carbon atoms in the alkyl residue and in which the benzene ring may be optionally substituted by 1 to 3 alkyl radicals containing from 1 to 3 carbon atoms,
provided that:

- on the one hand, when the polymers according to the present invention are prepared with one or more of the compounds (e) defined above, the ratio
  number of moles of (a) /
  number of moles of $NH_2$ groups
  as defined above is obeyed but at least 50 % of the $NH_2$ groups originate from the compound (b), and
- on the other hand, when the compound (iii) is employed, it represents only 2 to 30 % and preferably 4 to 15 % by weight of the mixture of bisimide(s) (a) + para-allylaniline (b).

**4.** Process according to any one of Claims 1 to 3, characterized in that the mixture of ingredients is obtained by adding to the compounds (a) + (b) + optionally (c) + optionally (d) + optionally (e): a compound (f) or a mixture of compounds (f) chosen from:

- (f1) a chlorinated or brominated epoxy resin, which has an epoxy equivalent weight of between 200 and 2000 and which consists of a glycidyl ether obtained by reacting epichlorohydrin with a derivative which is chlorinated or brominated on the aromatic nucleus (or nuclei) and originates from a polyphenol chosen from the group made up of the class of bis(hydroxyphenyl)alkanes; resorcinol; hydroquinone; pyrocatechol; 4,4'-dihydroxydiphenyl; and products of condensation of the abovementioned phenols with an aldehyde;
- (f2) an N,N'-alkylenebistetrahalophthalimide of formula:

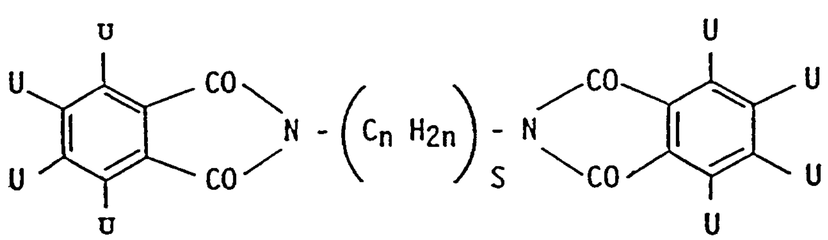

(VI)

in which:

- each of the symbols U, which are identical or different, denotes a chlorine or bromine atom,
- the alkylene radical $-C_nH_{2n}-$ may be linear or branched,
- n is an integer equal to 1, 2, 3 or 4, and
- S is 0 or 1,

- (f3) a halogenated product of formula:

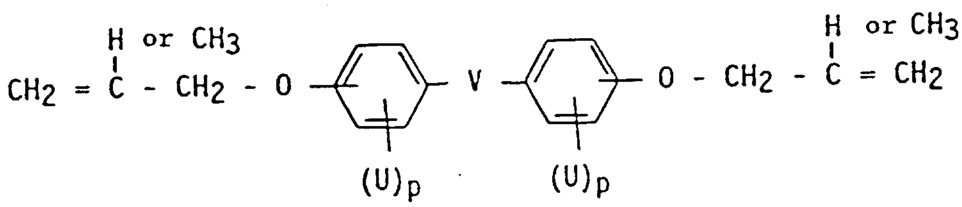

(VII)

in which:
- the symbols U have the meaning given above,
- the symbol V denotes a single valency bond, a linear or branched alkylene radical $-C_nH_{2n}-$, with n being equal to 1, 2, 3 or 4, or an oxygen atom,
- p is an integer equal to 2, 3 or 3,

- (f4) an unhalogenated epoxy resin, which has an epoxy equivalent weight of between 100 and 1000 and which consists of a glycidyl ether obtained by reacting epichlorohydrin with a polyphenol which is unchlorinated or unbrominated on the aromatic nucleus (nuclei), chosen from the group of the phenols discussed above in connection with the definition of the resin (f1);
- (f5) an alkenylphenol of formula:

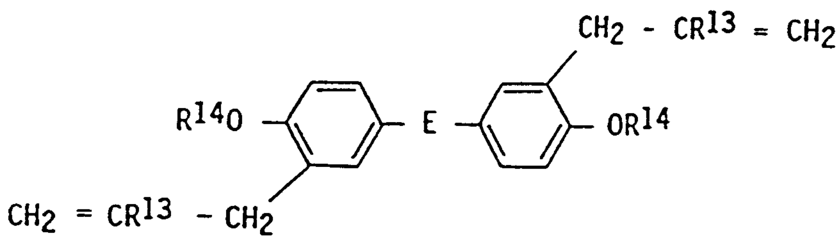

(VIII)

in which:
- the symbol E denotes a single valency bond or a divalent radical chosen from the group made up of the radicals:
  $- CH_2 -$ , $- CH_2 - CH_2 -$ ,

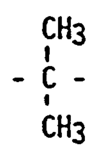

,

  - O - , - S - , - SO - ; and $- SO_2 -$;
- each of the symbols $R^{13}$, which are identical or different, denotes a hydrogen atom or a methyl radical,
- each of the symbols $R^{14}$, which are identical or different, denotes a hydrogen atom or a linear or branched alkyl radical containing from 1 to 6 carbon atoms, or a phenyl radical,

(f6) an acrylate of general formula:

$$(CH_2 = CR^{15} - CO - O)_n - B \qquad (IX)$$

in which:
- the symbol $R^{15}$ denotes a hydrogen atom or a methyl radical,
- n denotes a whole or fractional number equal to at least 1 and not exceeding 8,

- the symbol B denotes an organic radical of valency n, derived from a linear or branched saturated aliphatic residue containing from 1 to 30 carbon atoms and capable of containing one or more oxygen bridges and/or one or more free hydroxyl functional groups, or from an aromatic residue (of aryl or arylaliphatic type) containing from 6 to 150 carbon atoms, consisting of a benzene nucleus which may be substituted by one to three alkyl radicals containing from 1 to 5 carbon atoms, or of a number of benzene rings optionally substituted as shown above and joined together by a single valency bond, an inert group or an alkylene radical containing from 1 to 3 carbon atoms, it being possible for the said aromatic residue to contain in various places of its structure one or more oxygen bridges and/or one or more free hydroxyl functional groups, it being possible for the free valencies of the aromatic radical B to be carried by a carbon atom of an aliphatic chain and/or by a carbon atom of a benzene nucleus,

  and additionally characterized in that when a compound (f) (or a mixture of compounds f) is employed for producing the polymers according to the present invention, it represents 2 to 35 %, preferably 5 to 30 %, by weight of the mixture of (a) + (b) + optionally (c) + optionally (d) + optionally (e).

**5.** Process according to any one of Claims 1 to 4, characterized in that the mixture of ingredients is obtained by adding to the compounds (a) and (b) + optionally (c) + optionally (d) + optionally (e) + optionally (f):
a compound (g) consisting of an N,N'-bismaleimide containing a diorganosiloxane group in its structure, the quantity of compound (g) introduced being between 1 and 40 %, preferably between 5 and 30 %, of the total weight of the compounds (a) + (b) + optionally (c) + optionally (d) + optionally (e) + optionally (f).

**6.** Process according to Claim 5, characterized in that the N,N'-bismaleimide containing a diorganopolysiloxane group (g) has the following formula:

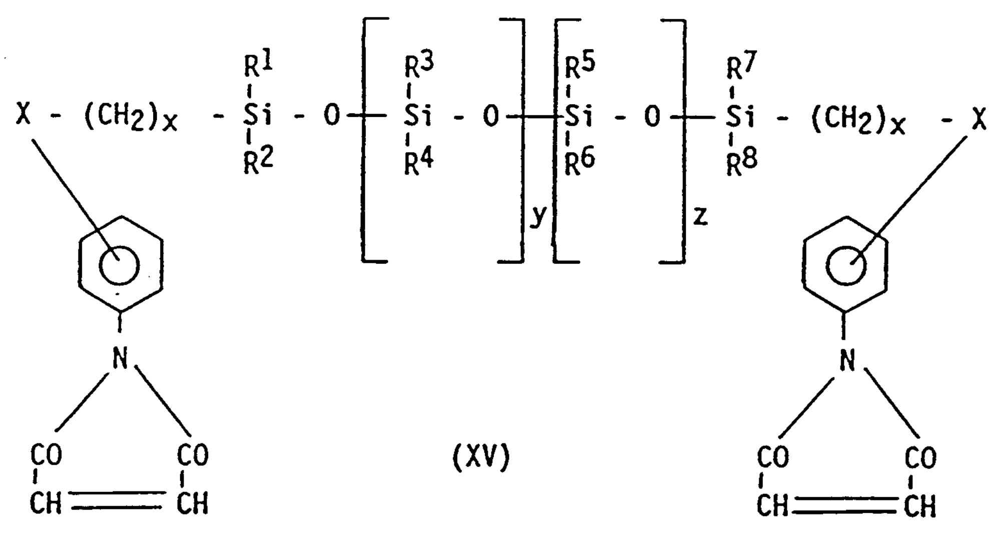

(XV)

in which:

- X, which is in an ortho, meta or para position in relation to the carbon atom of the benzene ring which is linked to nitrogen, denotes a single valency bond or an atom or group as follows:
  - O - , - S - ,

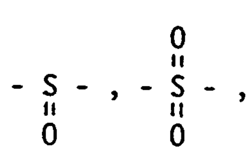

- each of $R^1$, $R^2$, $R^3$, $R^4$, $R^5$, $R^6$, $R^7$ and $R^8$, which are identical or different, denotes a monovalent hydrocarbon radical chosen from linear or branched alkyl radicals containing from 1 to 12 carbon atoms, it being possible for these radicals to be substituted by one or more chlorine, bromine or fluorine atoms or by a -CN group, or from a phenyl radical optionally substituted by one or more alkyl and/or alkoxy radicals containing from 1 to 4 carbon atoms or by one or more chlorine atoms,
- the symbol X is an integer lying in the range from 2 to 8, and
- the symbols y and z denote identical or different, whole or fractional numbers whose sum lies in the range from 0 to 100.

**7.** Process for the preparation of polymers containing imide groups, which are in the form of heat-curable prepolymers which are soluble in polar organic solvents and exhibit a softening point at a temperature which is lower than 200 °C, which consists in heating, between 50 and 180 °C, the mixture of the compounds (a) and (b) + optionally (d) + optionally (e) + optionally (f) + optionally (g).

**8.** Process according to any one of Claims 1 to 7, characterized in that the compounds (a) and (b) + optionally (c) + optionally (d) + optionally (e) + optionally (f) + optionally (g) are mixed and that heating between 50 and 180 °C is carried out, in that the prepolymer thus obtained is isolated and ground, and in that this prepolymer is cured between 180 and 300 °C.

**9.** Use of polymers prepared according to Claim 7 for the production of moulded objects, coatings, articles with a cellular structure and of reinforced and impregnated composite materials.

**Patentansprüche**

**Patentansprüche für folgende Vertragsstaaten : AT, BE, CH, DE, DK, FR, GB, GR, IT, LI, LU, NL, SE**

**1.** Polymere mit Imid-Gruppen, dadurch gekennzeichnet, daß sie das Produkt der Reaktion enthalten zwischen

(a) einem N,N'-Bis-Imid oder einer Assoziation von mehreren Bis-Imiden der Formel (I)

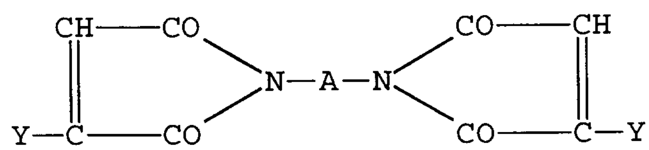

(I)

in der

. das Symbol Y H, $CH_3$ oder Cl darstellt,

. das Symbol A einen divalenten Rest darstellt, gewählt aus der durch die Reste: Cyclohexylene, Phenylene, 4-Methyl-1,3-phenylen, 2-Methyl-1,3-phenylen, 5-Methyl-1,3-phenylen, 6-Methyl-1,3-phenylen, 2,5-Diethyl-3-methyl-1,4-phenylen, und den Resten der Formel

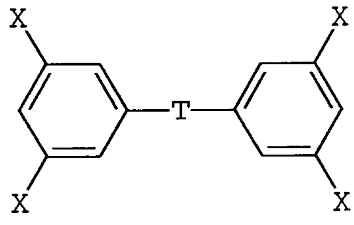

gebildeten Gruppe, worin T eine einfache Valenzbindung oder eine Gruppe $-CH_2-$ ;

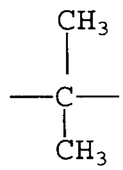 ;

-O- ;

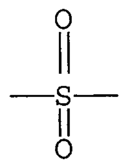 ; 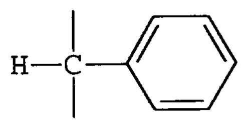 ; 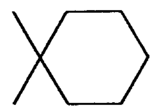 ;

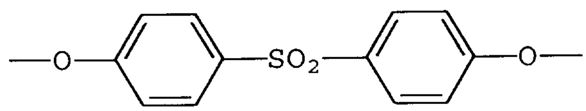

darstellt und X ein Wasserstoffatom, einen Methyl-, Ethyl- oder Isopropylrest bedeutet;

(b) einem oder mehreren para-Allylanilin(en) der Formel (II)

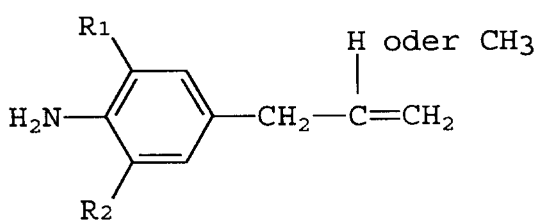 (II)

in der die Gruppen $R^1$ und $R^2$, gleich oder verschieden, Alkylgruppen mit 1 bis 4 Kohlenstoffatomen darstellen, wie beispielsweise die Gruppen Methyl, Ethyl, Propyl, Isopropyl, Butyl;

(c) gegebenenfalls in Anwesenheit einer Verbindung (c), ausgewählt unter

- den organischen Peroxiden,
- Azo-bis-isobutyronitril,
- einem Imidazol-Derivat der allgemeinen Formel

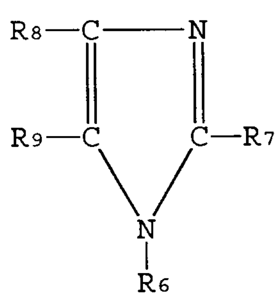

in der $R^6$, $R^7$, $R^8$ und $R^9$, gleich oder verschieden, jeweils darstellen: ein Wasserstoffatom, einen Rest Alkyl oder Alkoxy mit 1 bis 20 Kohlenstoffatomen, Vinyl, Phenyl, Nitro, wobei $R^8$ zusammen mit $R^9$ und den Kohlenstoffatomen, an die diese Reste gebunden sind, einen einzelnen Ring bilden können, wie beispielsweise einen Benzolring, und $R^6$ auch eine Carbonylgruppe bedeuten kann, die

an einen zweiten Imidazolring gebunden ist;
(d) gegebenenfalls in Anwesenheit einer Verbindung (d), ausgewählt unter den Vinylpyridinen, N-Vinylpyrrolidon, Allylisocyanurat, Vinyltetrahydrofuran und ihren Mischungen,
wobei die Mengen von N,N'-Bis-Imid (a) und p-Allylanilin (b) in der Weise gewählt werden, daß das Verhältnis

$$\frac{\text{Anzahl Mole von (a)}}{\text{Anzahl Mole von } NH_2\text{-Gruppen}}$$

zwischen 20 und 0,1 liegt;
die Verbindung (c), wenn sie verwendet wird, 0,01 bis 6 Gew.-% der Summe der Verbindungen (a) + (b) darstellt, und die Verbindung (d), wenn sie verwendet wird, weniger als 50 Gew.-% der Summe der Verbindungen (a) + (b) darstellt.

**2.** Polymere nach Anspruch 1, dadurch gekennzeichnet, daß die Mengen von N,N'-Bis-Imid (a) und p-Allylanilin (b) in der Weise gewählt werden, daß das Verhältnis

$$\frac{\text{Anzahl Mole von (a)}}{\text{Anzahl Mole von } NH_2\text{-Gruppen}}$$

zwischen 5 und 0,5 liegt;
- daß die Verbindung (c), wenn sie verwendet wird, 0,1 bis 3 Gew.-% der Summe der Verbindungen (a) + (b) darstellt,
- und daß die Verbindung (d), wenn sie verwendet wird, 1 bis 25 Gew.-% der Summe der Verbindungen (a) + (b) darstellt.

**3.** Polymere nach irgendeinem der Ansprüche 1 oder 2, dadurch gekennzeichnet, daß sie unter Zugabe der nachstehenden Verbindungen zu den Verbindungen (a) und (b) mit gegebenenfalls (c) und gegebenenfalls (d) erhalten werden:
einer Verbindung (e), bestehend aus einem oder mehreren biprimären Diamin(en), ausgewählt unter:
i) den Gattungen, die der allgemeinen Formel (IV) entsprechen:

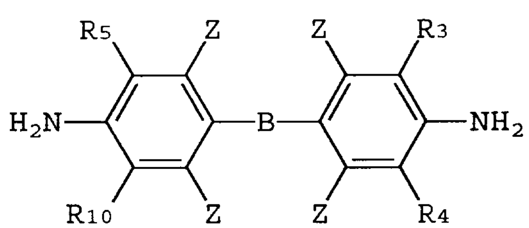

(IV)

in der
. die Symbole $R^5$, $R^{10}$, $R^3$ und $R^4$, gleich oder verschieden, jeweils einen der Reste Methyl, Ethyl, Propyl oder Isopropyl darstellen;
. die Symbole Z, gleich oder verschieden, jeweils ein Wasserstoffatom oder ein Chloratom darstellen;

. das Symbol B einen divalenten Rest bedeutet, gewählt aus der durch die Reste $-CH_2-$ ,

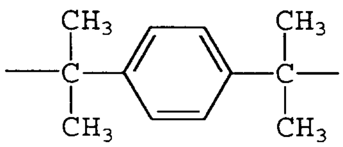

und

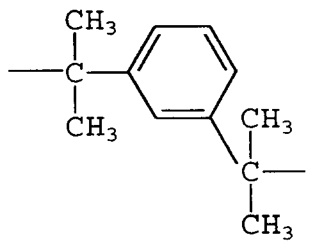

gebildeten Gruppe,

(2i) den Gattungen, die der allgemeinen Formel (III) entsprechen:

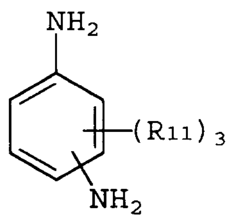

(III)

in der

. sich die Aminoreste untereinander in Position meta oder para befinden;

. die Symbole $R^{11}$, gleich oder verschieden, jeweils einen der Reste Methyl, Ethyl, Propyl oder Isopropyl darstellen, und

(3i) den Gattungen, die aus einem oder mehreren substituierten Guanamin(en) der Formel (V)

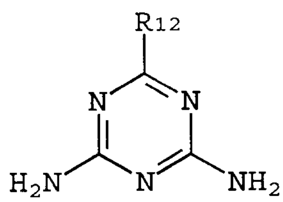

(V)

gebildet werden, in der das Symbol $R^{12}$ darstellt: einen linearen oder verzweigten Alkylrest mit 1 bis 12 Kohlenstoffatomen, wie beispielsweise einen der Reste Methyl, Ethyl, Propyl, Butyl, Pentyl, Hexyl, Heptyl, Octyl, Nonyl, Decyl, Undecyl oder Dodecyl; einen Alkoxyrest mit 1 bis 12 Kohlenstoffatomen, einen Phenylrest, gegebenenfalls substituiert durch 1 bis 3 Alkylreste mit 1 bis 3 Kohlenstoffatomen; einen Phenylalkylrest mit 1 bis 3 Kohlenstoffatomen im Alkylrest, wobei der Benzolkern gegebenenfalls durch 1 bis 3 Alkylreste mit 1 bis 3 Kohlenstoffatomen substituiert sein kann,
mit der Maßgabe, daß

- einerseits, wenn die Polymere gemäß der vorliegenden Erfindung mit einer oder mehreren der vorstehend definierten Verbindung(en) hergestellt werden, das wie vorstehend definierte Verhältnis

$$\frac{\text{Anzahl Mole von (a)}}{\text{Anzahl Mole von } NH_2\text{-Gruppen}}$$

  eingehalten wird, jedoch mindestens 50 % der $NH_2$-Gruppen von der Verbindung (b) stammen, und
- andererseits, wenn die Verbindung (3i) verwendet wird, sie lediglich 2 bis 30 Gew.-% und vorzugsweise 4 bis 15 Gew.-% der Mischung Bis-Imid(e) (a) + para-Allylanilin (b) darstellt.

**4.** Polymere nach irgendeinem der Ansprüche 1 bis 3, dadurch gekennzeichnet, daß sie unter Zugabe der nachstehenden Verbindungen zu den Verbindungen (a) und (b) + gegebenenfalls (c) + gegebenenfalls (d) + gegebenenfalls (e) erhalten werden:
einer Verbindung (f) oder einer Mischung von Verbindungen (f), ausgewählt unter:

* (f1) einem chlorierten oder bromierten Epoxyharz, das ein Epoxy-Äquivalentgewicht zwischen 200 und 2000 besitzt und das aus einem Glycidether besteht, erhalten durch Reaktion von Epichlorhydrin mit einem an dem(n) aromatischen Kern(en) chlorierten oder bromierten Derivat, das von einem Polyphenol stammt, gewählt aus der von der Familie der Bis-(Hydroxyphenyl)-alkane; Resorcin; Hydrochinon, Brenzkatechin; 4,4'-Dihydroxy- diphenyl und den Kondensationsprodukten der vorstehend genannten Phenole mit einem Aldehyd gebildeten Gruppe;
* (f2) einem N,N'-Alkylen-bis-tetrahalogenphthalimid der Formel (VI)

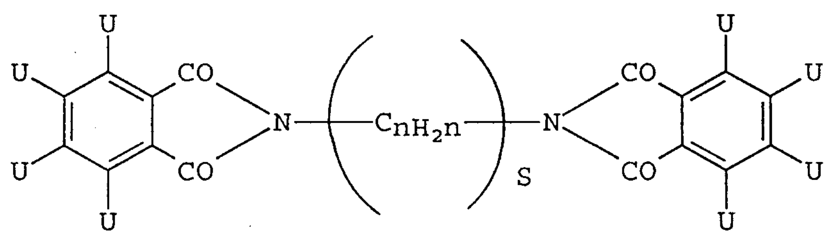

(VI)

in der

. die Symbole U, gleich oder verschieden, jeweils ein Chlor- oder Bromatom darstellen;
. der Alkylenrest $-C_nH_{2n}-$ linear oder verzweigt sein kann;
. n eine ganze Zahl gleich 1, 2, 3 oder 4 ist;
. S 0 oder 1 ist;

* (f3) einem halogenierten Produkt der Formel (VII)

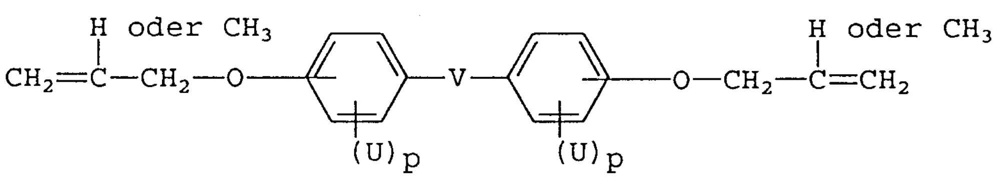

(VII)

in der

. die Symbole U die vorstehend angegebene Bedeutung besitzen;
. das Symbol V eine einfache Valenzbindung, einen linearen oder verzweigten Alkylenrest $-C_nH_{2n}-$ mit n gleich 1, 2, 3 oder 4 oder ein Sauerstoffatom darstellt;
. p eine ganze Zahl gleich 2, 3 oder 4 ist;

* (f4) einem nicht halogenierten Epoxyharz, das ein Epoxy-Äquivalentgewicht zwischen 100 und 1000 besitzt und das aus einem Glycidether besteht, erhalten durch Reaktion von Epichlorhydrin mit einem Polyphenol, das an dem(n) aromatischen Kern(en) nicht chloriert oder nicht bromiert ist und gewählt wird aus der bereits vorstehend bei der Definition des Harzes (f1) erwähnten Gruppe der Phenole;
* (f5) einem Alkenylphenol der Formel (VIII)

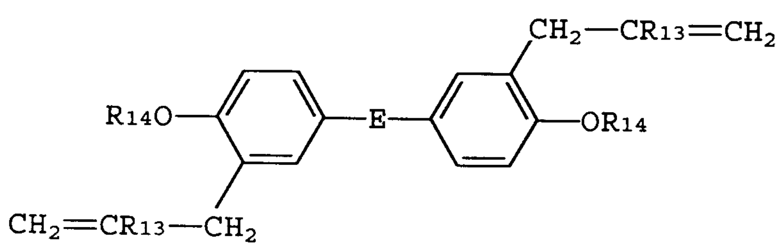

(VIII)

in der

. das Symbol E eine einfache Valenzbindung oder einen divalenten Rest darstellt, gewählt aus der durch die Reste $-CH_2-$ ; $-CH_2-CH_2-$ ; $-C(CH_3)_2-$ ; -O- ; -S- ; -SO- und $-SO_2-$ gebildeten Gruppe;

. die Symbole $R^{13}$, gleich oder verschieden, jeweils ein Wasserstoffatom oder einen Methylrest darstellen;

. die Symbole $R^{14}$, gleich oder verschieden, jeweils ein Wasserstoffatom oder einen linearen oder verzweigten Alkylrest mit 1 bis 6 Kohlenstoffatomen oder einen Phenylrest bedeuten;

* (f6) einem Acrylat der allgemeinen Formel (IX)

$$(CH_2 = CR^{15} - CO - O \}_n\!-\!B \qquad (IX)$$

in der

. das Symbol $R^{15}$ ein Wasserstoffatom oder einen Methylrest darstellt;

. n eine ganze oder gebrochene Zahl von mindestens 1 und höchstens 8 bedeutet;

. das Symbol B einen organischen Rest mit der Valenz n darstellt, abgeleitet von: einem gesättigten, linearen oder verzweigten aliphatischen Rest mit 1 bis 30 Kohlenstoffatomen, der eine oder mehrere Sauerstoffbrücken und/oder eine oder mehrere freie Hydroxylfunktionen umfassen kann; einem aromatischen Rest (vom Aryl- oder Arylaliphaten-Typ) mit 6 bis 150 Kohlenstoffatomen, bestehend aus einem Benzolkern, der durch ein bis drei Alkylreste mit 1 bis 5 Kohlenstoffatomen substituiert sein kann, oder aus mehreren Benzolkernen, gegebenenfalls substituiert wie vorstehend angegeben und untereinander verbunden durch eine einfache Valenzbindung, eine inerte Gruppe oder einen Alkylenrest mit 1 bis 3 Kohlenstoffatomen, wobei der genannte aromatische Rest an verschiedenen Stellen seiner Struktur eine oder mehrere Sauerstoffbrücken und/oder eine oder mehrere freie Hydroxylfunktionen umfassen kann und die freie(n) Valenz(en) des aromatischen Restes B von einem Kohlenstoffatom einer aliphatischen Kette und/oder von einem Kohlenstoffatom eines Benzolkernes getragen werden können,

und außerdem dadurch gekennzeichnet, daß in dem Fall, wo eine Verbindung (f) (oder eine Mischung von Verbindungen f) für die Herstellung der Polymere gemäß der vorliegenden Erfindung verwendet wird, sie 2 bis 35 Gew.-%, vorzugsweise 5 bis 30 Gew.-%, der Mischung (a) und (b) + gegebenenfalls (c) + gegebenenfalls (d) + gegebenenfalls (e) darstellt.

**5.** Polymere nach irgendeinem der Ansprüche 1 bis 4, dadurch gekennzeichnet, daß sie unter Zugabe der nachstehenden Verbindungen zu den Verbindungen (a) und (b) + gegebenenfalls (c) + gegebenenfalls (d) + gegebenenfalls (e) + gegebenenfalls (f) erhalten werden:
einer Verbindung (g), bestehend aus einem N,N'-Bis-Maleimid, das in seiner Struktur eine Diorganosiloxan-Gruppe umfaßt, wobei die Menge an der eingesetzten Verbindung (g) zwischen 1 und 40 %, vorzugsweise zwischen 5 und 30 %, des Gesamtgewichtes der Verbindungen (a) und (b) + gegebenenfalls (c) + gegebenenfalls (d) + gegebenenfalls (e) + gegebenenfalls (f) beträgt.

**6.** Polymer nach Anspruch 5, dadurch gekennzeichnet, daß das N,N'-Bis-Maleimid mit Diorganopolysiloxan-Gruppe (g) der folgenden Formel (XV) entspricht:

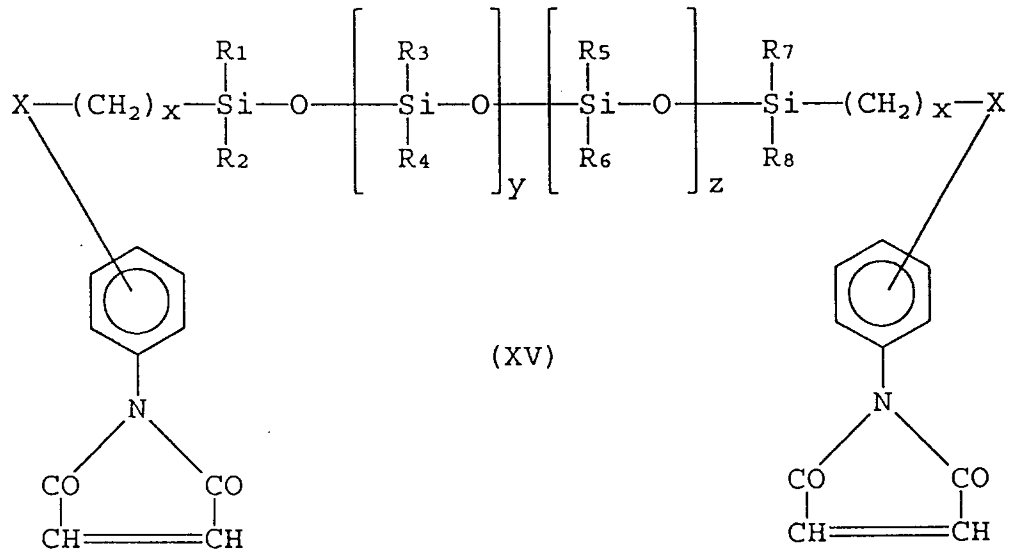

(XV)

in der

- X, das sich in bezug auf das Kohlenstoffatom des an den Stickstoff gebundenen Benzolringes in Position ortho, meta oder para befindet, eine einfache Valenzbindung oder eines der folgenden Atome oder Gruppen darstellt:
  -O- ; -S- ; -SO- ; $-SO_2-$ ;
- $R^1$, $R^2$, $R^3$, $R^4$, $R^5$, $R^6$, $R^7$ und $R^8$, gleich oder verschieden, jeweils einen monovalenten Kohlenwasserstoffrest bedeuten, ausgewählt unter: den linearen oder verzweigten Alkylresten mit 1 bis 12 Kohlenstoffatomen, wobei diese Reste durch ein oder mehrere Chlor-, Brom- oder Fluoratome oder durch eine Gruppe -CN substituiert sein können; einem Phenylrest, gegebenenfalls substituiert durch einen oder mehrere Alkylreste und/oder Alkoxyreste mit 1 bis 4 Kohlenstoffatomen oder durch ein oder mehrere Chloratome;
- das Symbol x eine ganze Zahl im Intervall von 2 bis 8 ist;
- die Symbole y und z, gleich oder verschieden, ganze oder gebrochene Zahlen darstellen, deren Summe im Intervall von 0 bis 100 liegt.

**7.** Polymere nach irgendeinem der vorstehenden Ansprüche, dadurch gekennzeichnet, daß sie in Form von gehärteten Polymeren vorliegen, in den üblichen lösungsmitteln unlöslich sind und keine nennenswerte Erweichung unterhalb der Temperatur aufweisen, bei der sie beginnen sich zu zersetzen.

**8.** Polymere nach irgendeinem der Ansprüche 1 bis 6, dadurch gekennzeichnet, daß sie in Form von thermohärtbaren Prepolymeren vorliegen, löslich in polaren organischen Lösungsmitteln, und einen Erweichungspunkt bei einer Temperatur von unterhalb 200 °C aufweisen.

**9.** Polymere nach Anspruch 8 in Form von Prepolymer, erhalten durch Erhitzen der Mischung der Verbindungen (a) und (b) + gegebenenfalls (d) + gegebenenfalls (e) + gegebenenfalls (f) + gegebenenfalls (g) auf eine Temperatur zwischen 50 und 180 °C.

**10.** Verfahren zur Herstellung der Polymere nach irgendeinem der Ansprüche 1 bis 7, dadurch gekennzeichnet, daß man die Verbindungen (a) und (b) + gegebenenfalls (c) + gegebenenfalls (d) + gegebenenfalls (e) + gegebenenfalls (f) + gegebenenfalls (g) vermischt, und dadurch, daß man sie auf eine Temperatur zwischen 50 und 180 °C erhitzt, und dadurch, daß man das auf diese Weise erhaltene Prepolymer isoliert und zerkleinert, und dadurch, daß man dieses Prepolymer bei einer Temperatur zwischen 180 und 300 °C brennt.

**11.** Verwendung der Polymere nach Anspruch 8 oder 9 für die Realisierung von geformten Gegenständen, Überzügen, Artikeln mit Zellstruktur und verstärkten und imprägnierten Komposit-Materialien.

**Patentansprüche für folgenden Vertragsstaat : ES**

1. Verfahren zur Herstellung von Polymeren mit Imid-Gruppen, die in Form von gehärteten Polymeren vorliegen, in den üblichen Lösungsmitteln unlöslich sind und keine nennenswerte Erweichung unterhalb der Temperatur aufweisen, bei der sie beginnen sich zu zersetzen, wobei das Verfahren darin besteht, die Mischung der folgenden Bestandteile zu erhitzen:
   (a) ein N,N'-Bis-Imid oder eine Assoziation von mehreren Bis-Imiden der Formel (I)

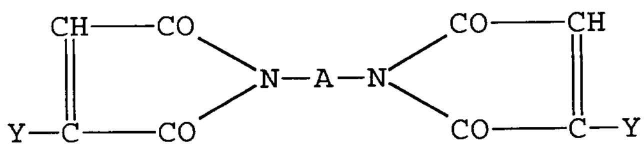

(I)

in der
   . das Symbol Y H, $CH_3$ oder Cl darstellt,
   . das Symbol A einen divalenten Rest darstellt, gewählt aus der durch die Reste: Cyclohexylene, Phenylene, 4-Methyl-1,3-phenylen, 2-Methyl-1,3-phenylen, 5-Methyl-1,3-phenylen, 6-Methyl-1,3-phenylen, 2,5-Diethyl-3-methyl-1,4-phenylen, und den Resten der Formel

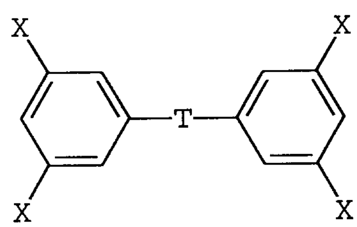

gebildeten Gruppe, worin T eine einfache Valenzbindung oder eine Gruppe
$-CH_2-$;

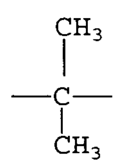

;

-O-;

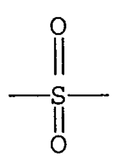

;

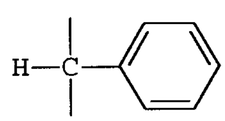

;

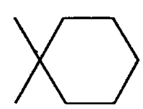

;

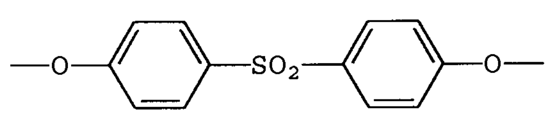

darstellt und X ein Wasserstoffatom, einen Methyl-, Ethyl- oder Isopropylrest bedeutet;

(b) ein oder mehrere para-Allylanilin(e) der Formel (II)

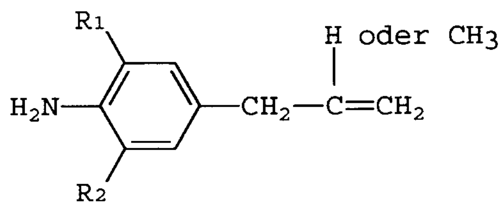

(II)

in der die Gruppen $R^1$ und $R^2$, gleich oder verschieden, Alkylgruppen mit 1 bis 4 Kohlenstoffatomen darstellen, wie beispielsweise die Gruppen Methyl, Ethyl, Propyl, Isopropyl, Butyl;
(c) gegebenenfalls in Anwesenheit einer Verbindung (c), ausgewählt unter

- den organischen Peroxiden,
- Azo-bis-isobutyronitril,
- einem Imidazol-Derivat der allgemeinen Formel

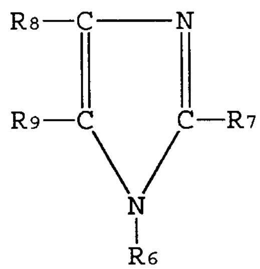

in der $R^6$, $R^7$, $R^8$ und $R^9$, gleich oder verschieden, jeweils darstellen: ein Wasserstoffatom, einen Rest Alkyl oder Alkoxy mit 1 bis 20 Kohlenstoffatomen, Vinyl, Phenyl, Nitro, wobei $R^8$ zusammen mit $R^9$ und den Kohlenstoffatomen, an die diese Reste gebunden sind, einen einzelnen Ring bilden können, wie beispielsweise einen Benzolring, und $R^6$ auch eine Carbonylgruppe bedeuten kann, die an einen zweiten Imidazolring gebunden ist;

(d) gegebenenfalls in Anwesenheit einer Verbindung (d), ausgewählt unter den Vinylpyridinen, N-Vinylpyrrolidon, Allylisocyanurat, Vinyltetrahydrofuran und ihren Mischungen,
wobei die Mengen von N,N'-Bis-Imid (a) und p-Allylanilin (b) in der Weise gewählt werden, daß das Verhältnis

$$\frac{\text{Anzahl Mole von (a)}}{\text{Anzahl Mole von } NH_2\text{-Gruppen}}$$

zwischen 20 und 0,1 liegt;
die Verbindung (c), wenn sie verwendet wird, 0,01 bis 6 Gew.-% der Summe der Verbindungen (a) + (b) darstellt, und die Verbindung (d), wenn sie verwendet wird, weniger als 50 Gew.-% der Summe der Verbindungen (a) + (b) darstellt.

**2.** Verfahren nach Anspruch 1, dadurch gekennzeichnet, daß die Mengen von N,N'-Bis-Imid (a) und p-Allylanilin (b) in der Weise gewählt werden, daß das Verhältnis

$$\frac{\text{Anzahl Mole von (a)}}{\text{Anzahl Mole von } NH_2\text{-Gruppen}}$$

zwischen 5 und 0,5 liegt;

- daß die Verbindung (c), wenn sie verwendet wird, 0,1 bis 3 Gew.-% der Summe der Verbindungen (a) + (b) darstellt,
- und daß die Verbindung (d), wenn sie verwendet wird, 1 bis 25 Gew.-% der Summe der Verbindungen (a) + (b) darstellt.

**3.** Verfahren nach irgendeinem der Ansprüche 1 oder 2, dadurch gekennzeichnet, daß die Mischung der Bestandteile unter Zugabe der nachstehenden Verbindungen zu den Verbindungen (a) und (b) + gegebenenfalls (c) + gegebenenfalls (d) erhalten wird:
einer Verbindung (e), bestehend aus einem oder mehreren biprimären Diamin(en), ausgewählt unter:
i) den Gattungen, die der allgemeinen Formel (IV) entsprechen:

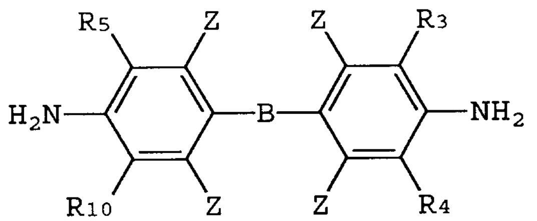

(IV)

in der

. die Symbole $R^5$, $R^{10}$, $R^3$ und $R^4$, gleich oder verschieden, jeweils einen der Reste Methyl, Ethyl, Propyl oder Isopropyl darstellen;
. die Symbole Z, gleich oder verschieden, jeweils ein Wasserstoffatom oder ein Chloratom darstellen;
. das Symbol B einen divalenten Rest bedeutet, gewählt aus der durch die Reste $-CH_2-$ ,

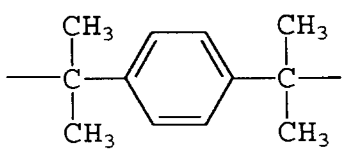

und

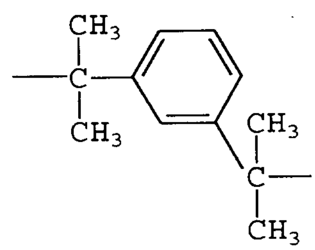

gebildeten Gruppe,

(2i) den Gattungen, die der allgemeinen Formel (III) entsprechen:

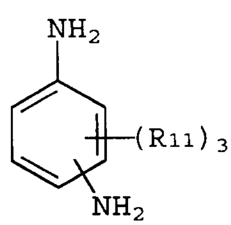

(III)

in der

. sich die Aminoreste untereinander in Position meta oder para befinden;
. die Symbole $R^{11}$, gleich oder verschieden, jeweils einen der Reste Methyl, Ethyl, Propyl oder Isopropyl darstellen, und

(3i) den Gattungen, die aus einem oder mehreren substituierten Guanamin(en) der Formel (V)

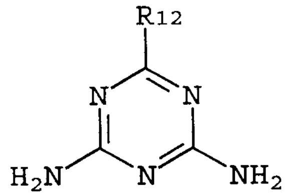

(V)

gebildet werden, in der das Symbol $R^{12}$ darstellt: einen linearen oder verzweigten Alkylrest mit 1 bis 12 Kohlenstoffatomen, wie beispielsweise einen der Reste Methyl, Ethyl, Propyl, Butyl, Pentyl, Hexyl, Heptyl, Octyl, Nonyl, Decyl, Undecyl oder Dodecyl; einen Alkoxyrest mit 1 bis 12 Kohlenstoffatomen, einen Phenylrest, gegebenenfalls substituiert durch 1 bis 3 Alkylreste mit 1 bis 3 Kohlenstoffatomen; einen Phenylalkylrest mit 1 bis 3 Kohlenstoffatomen im Alkylrest, wobei der Benzolkern gegebenenfalls durch 1 bis 3 Alkylreste mit 1 bis 3 Kohlenstoffatomen substituiert sein kann,
mit der Maßgabe, daß

- einerseits, wenn die Polymere gemäß der vorliegenden Erfindung mit einer oder mehreren der vorstehend definierten Verbindung(en) hergestellt werden, das wie vorstehend definierte Verhältnis

$$\frac{\text{Anzahl Mole von (a)}}{\text{Anzahl Mole von } NH_2\text{-Gruppen}}$$

  eingehalten wird, jedoch mindestens 50 % der $NH_2$-Gruppen von der Verbindung (b) stammen, und
- andererseits, wenn die Verbindung (3i) verwendet wird, sie lediglich 2 bis 30 Gew.-% und vorzugsweise 4 bis 15 Gew.-% der Mischung Bis-Imid(e) (a) + para-Allylanilin (b) darstellt.

**4.** Verfahren nach irgendeinem der Ansprüche 1 bis 3, dadurch gekennzeichnet, daß die Mischung der Bestandteile unter Zugabe der nachstehenden Verbindungen zu den Verbindungen (a) und (b) + gegebenenfalls (c) + gegebenenfalls (d) + gegebenenfalls (e) erhalten wird:
einer Verbindung (f) oder einer Mischung von Verbindungen (f), ausgewählt unter:

* (f1) einem chlorierten oder bromierten Epoxyharz, das ein Epoxy-Äquivalentgewicht zwischen 200 und 2000 besitzt und das aus einem Glycidether besteht, erhalten durch Reaktion von Epichlorhydrin mit einem an dem(n) aromatischen Kern(en) chlorierten oder bromierten Derivat, das von einem Polyphenol stammt, gewählt aus der von der Familie der Bis-(Hydroxyphenyl)-alkane; Resorcin; Hydrochinon, Brenzkatechin; 4,4'-Dihydroxy-diphenyl und den Kondensationsprodukten der vorstehend genannten Phenole mit einem Aldehyd gebildeten Gruppe;
* (f2) einem N,N'-Alkylen-bis-tetrahalogenphthalimid der Formel (VI)

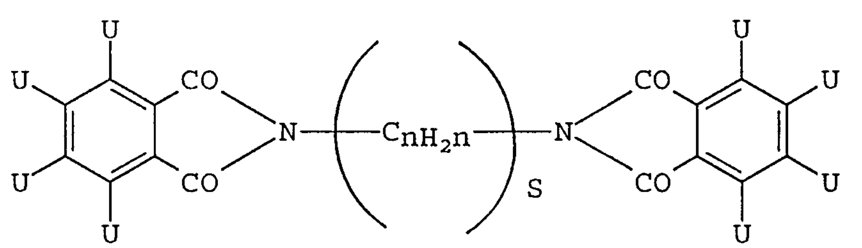

(VI)

in der

. die Symbole U, gleich oder verschieden, jeweils ein Chlor- oder Bromatom darstellen;
. der Alkylenrest $-C_nH_{2n}-$ linear oder verzweigt sein kann;
. n eine ganze Zahl gleich 1, 2, 3 oder 4 ist;
. S 0 oder 1 ist;

* (f3) einem halogenierten Produkt der Formel (VII)

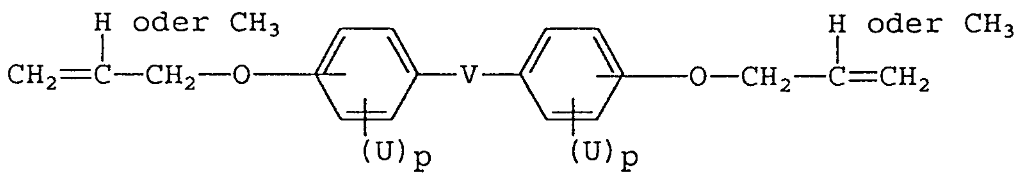

(VII)

in der

. die Symbole U die vorstehend angegebene Bedeutung besitzen;
. das Symbol V eine einfache Valenzbindung, einen linearen oder verzweigten Alkylenrest $-C_nH_{2n}-$ mit n gleich 1, 2, 3 oder 4 oder ein Sauerstoffatom darstellt;
. p eine ganze Zahl gleich 2, 3 oder 4 ist;

* (f4) einem nicht halogenierten Epoxyharz, das ein Epoxy-Äquivalentgewicht zwischen 100 und 1000 besitzt und das aus einem Glycidether besteht, erhalten durch Reaktion von Epichlorhydrin mit einem Polyphenol, das an dem(n) aromatischen Kern(en) nicht chloriert oder nicht bromiert ist und gewählt wird aus der bereits vorstehend bei der Definition des Harzes (f1) erwähnten Gruppe der Phenole;
* (f5) einem Alkenylphenol der Formel (VIII)

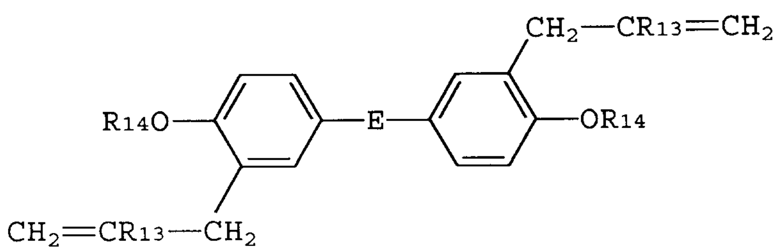

(VIII)

in der

. das Symbol E eine einfache Valenzbindung oder einen divalenten Rest darstellt, gewählt aus der durch die Reste $-CH_2-$ ; $-CH_2-CH_2-$ ; $-C(CH_3)_2-$ ; -O- ; -S- ; -SO- und $-SO_2-$ gebildeten Gruppe;
. die Symbole $R^{13}$, gleich oder verschieden, jeweils ein Wasserstoffatom oder einen Methylrest darstellen;
. die Symbole $R^{14}$, gleich oder verschieden, jeweils ein Wasserstoffatom oder einen linearen oder verzweigten Alkylrest mit 1 bis 6 Kohlenstoffatomen oder einen Phenylrest bedeuten;

* (f6) einem Acrylat der allgemeinen Formel (IX)

$$(CH_2 = CR^{15} - CO - O)_n - B \quad (IX)$$

in der

. das Symbol $R^{15}$ ein Wasserstoffatom oder einen Methylrest darstellt;
. n eine ganze oder gebrochene Zahl von mindestens 1 und höchstens 8 bedeutet;
. das Symbol B einen organischen Rest mit der Valenz n darstellt, abgeleitet von: einem gesättigten, linearen oder verzweigten aliphatischen Rest mit 1 bis 30 Kohlenstoffatomen, der eine oder mehrere sauerstoffbrücken und/oder eine oder mehrere freie Hydroxylfunktionen umfassen kann; einem aromatischen Rest (vom Aryl- oder Arylaliphaten-Typ) mit 6 bis 150 Kohlenstoffatomen, bestehend aus einem Benzolkern, der durch ein bis drei Alkylreste mit 1 bis 5 Kohlenstoffatomen substituiert sein kann, oder aus mehreren Benzolkernen, gegebenenfalls substituiert wie vorstehend angegeben und untereinander verbunden durch eine einfache Valenzbindung, eine inerte Gruppe oder einen Alkylenrest mit 1 bis 3 Kohlenstoffatomen, wobei der genannte aromatische Rest an verschiedenen Stellen seiner Struktur eine oder mehrere Sauerstoffbrücken und/oder eine oder mehrere freie Hydroxylfunktionen umfassen kann und die freie(n) Valenz(en) des aromatischen Restes B von einem Kohlenstoffatom einer aliphatischen Kette und/oder von einem Kohlenstoffatom eines Benzolkernes getragen werden

können,
und außerdem dadurch gekennzeichnet, daß in dem Fall, wo eine Verbindung (f) (oder eine Mischung von Verbindungen f) für die Herstellung der Polymere gemäß der vorliegenden Erfindung verwendet wird, sie 2 bis 35 Gew.-%, vorzugsweise 5 bis 30 Gew.-%, der Mischung (a) und (b) + gegebenenfalls (c) + gegebenenfalls (d) + gegebenenfalls (e) darstellt.

**5.** Verfahren nach irgendeinem der Ansprüche 1 bis 4, dadurch gekennzeichnet, daß die Mischung der Bestandteile unter Zugabe der nachstehenden Verbindungen zu den Verbindungen (a) und (b) + gegebenenfalls (c) + gegebenenfalls (d) + gegebenenfalls (e) + gegebenenfalls (f) erhalten wird:
einer Verbindung (g), bestehend aus einem N,N'-Bis-Maleimid, das in seiner Struktur eine Diorganosiloxan-Gruppe umfaßt, wobei die Menge an der eingesetzten Verbindung (g) zwischen 1 und 40 %, vorzugsweise zwischen 5 und 30 %, des Gesamtgewichtes der Verbindungen (a) und (b) + gegebenenfalls (c) + gegebenenfalls (d) + gegebenenfalls (e) + gegebenenfalls (f) beträgt.

**6.** Verfahren nach Anspruch 5, dadurch gekennzeichnet, daß das N,N'-Bis-Maleimid mit Diorganopolysiloxan-Gruppe (g) der folgenden Formel (XV) entspricht:

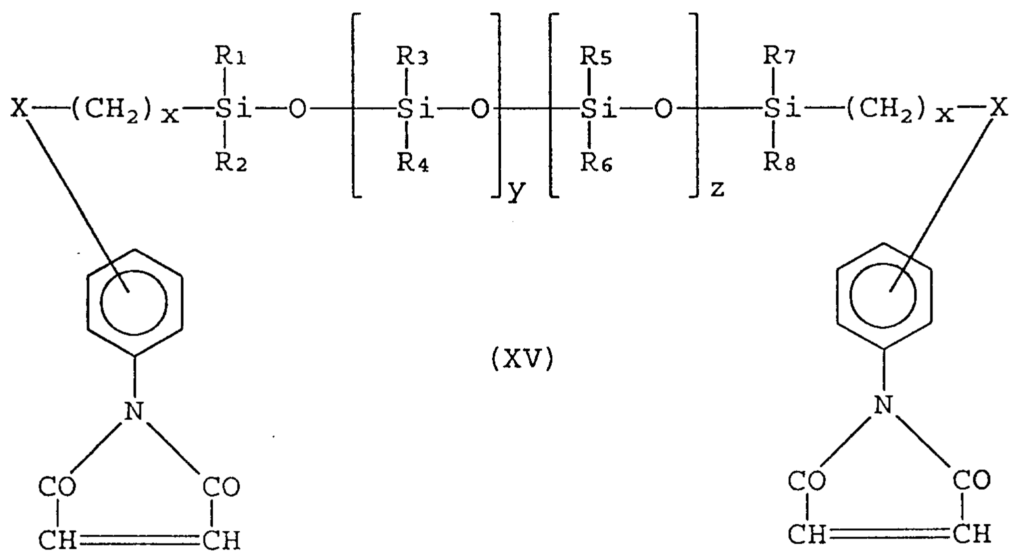

(XV)

in der

- X, das sich in bezug auf das Kohlenstoffatom des an den Stickstoff gebundenen Benzolringes in Position ortho, meta oder para befindet, eine einfache Valenzbindung oder eines der folgenden Atome oder Gruppen darstellt:
  -O- ; -S- ; -SO- ;-$SO_2$- ;
- $R^1$, $R^2$, $R^3$, $R^4$, $R^5$, $R^6$, $R^7$ und $R^8$, gleich oder verschieden, jeweils einen monovalenten Kohlenwasserstoffrest bedeuten, ausgewählt unter: den linearen oder verzweigten Alkylresten mit 1 bis 12 Kohlenstoffatomen, wobei diese Reste durch ein oder mehrere Chlor-, Brom- oder Fluoratome oder durch eine Gruppe -CN substituiert sein können; einem Phenylrest, gegebenenfalls substituiert durch einen oder mehrere Alkylreste und/oder Alkoxyreste mit 1 bis 4 Kohlenstoffatomen oder durch ein oder mehrere Chloratome;
- das Symbol x eine ganze Zahl im Intervall von 2 bis 8 ist;
- die Symbole y und z, gleich oder verschieden, ganze oder gebrochene Zahlen darstellen, deren Summe im Intervall von 0 bis 100 liegt.

**7.** Verfahren zur Herstellung von Polymeren mit Imid-Gruppen, die in Form von thermohärtbaren Prepolymeren vorliegen, löslich in polaren organischen Lösungsmitteln, und einen Erweichungspunkt bei einer Temperatur von unterhalb 200 °C aufweisen, das darin besteht, die Mischung der Verbindungen (a) und (b) + gegebenenfalls (c) + gegebenenfalls (d) + gegebenenfalls (e) + gegebenenfalls (f) + gegebenenfalls (g) auf eine Temperatur zwischen 50 und 180 °C zu erhitzen.

**8.** Verfahren nach irgendeinem der Ansprüche 1 bis 6, dadurch gekennzeichnet, daß man die Verbindungen (a) und (b) + gegebenenfalls (c) + gegebenenfalls (d) + gegebenenfalls (e) + gegebenenfalls (f) + gegebenenfalls (g) vermischt, und dadurch, daß man sie auf eine Temperatur zwischen 50 und 180 °C erhitzt, und dadurch, daß man das auf diese Weise erhaltene Prepolymer isoliert und zerkleinert, und dadurch, daß man dieses Prepolymer bei einer Temperatur zwischen 180 und 300 °C brennt.

**9.** Verwendung der Polymere, hergestellt nach Anspruch 7, für die Realisierung von geformten Gegenständen, Überzügen, Artikeln mit Zellstruktur und verstärkten und imprägnierten Komposit-Materialien.